# EUROPÄISCHE PATENTANMELDUNG

(11) **EP 4 803 764 A1**
(43) Veröffentlichungstag der Anmeldung: **09.09.2026**
(21) Anmeldenummer: 26159631.6
(22) Anmeldetag: 19.02.2026
(51) Int. Cl.: F16C 32/04, H02K 7/09

(54) **MAGNETLAGERVORRICHTUNG UND PUMPENEINHEIT**

(30) Priorität: 05.03.2025 EP 25161949
(71) Anmelder: Levitronix GmbH, 8048 Zürich (CH)
(72) Erfinder: Steinert, Daniel, 8180 Bülach (CH); Holenstein, Thomas, 5222 Umiken (CH)
(74) Vertreter: IPS Irsch AG

(57) **Zusammenfassung**

Es wird eine Magnetlagervorrichtung zur berührungslos magnetischen Lagerung eines Rotors (3) vorgeschlagen, wobei die Magnetlagervorrichtung einen Stator (2) umfasst, der sich in einer axialen Richtung (A) erstreckt und eine becherförmige Ausnehmung (211) aufweist, in die der Rotor (3) einsetzbar ist, wobei der Stator (2) eine Mehrzahl von Spulenkernen (25) aufweist, von denen jeder einen Verbindungsschenkel (26) und ein Polstück (27) aufweist, wobei sich jeder Verbindungsschenkel (26) von einem ersten Ende (261) bis zu einem zweiten Ende (262) erstreckt, wobei das erste Ende (261) an einem Rückschluss (28) anliegt, wobei jedes Polstück (27) eine zweite Kontaktfläche (271) aufweist, die an dem zweiten Ende (262) des Verbindungsschenkel (26) anliegt, wobei sich jedes Polstück (27) von der zweiten Kontaktfläche (271) in einer radialer Richtung (R) bis zu einer Stirnfläche (272) erstreckt, wobei alle Stirnflächen (272) um die becherförmige Ausnehmung (211) herum angeordnet sind und wobei an jedem Verbindungsschenkel (26) mindestens eine konzentrierte Wicklung (61) angeordnet ist, welche den jeweiligen Verbindungsschenkel (26) umgibt, wobei sich jeder Verbindungsschenkel (26) schräg zur axialen Richtung (A) erstreckt, sodass das zweite Ende (262) jedes Verbindungsschenkels (26) in radialer Richtung (R) einen geringeren Abstand zur becherförmigen Ausnehmung (211) aufweist als das erste Ende (261).Ferner wird eine Pumpeneinheit für solch eine Magnetlagervorrichtung vorgeschlagen.

## Beschreibung

Die Erfindung betrifft eine Magnetlagervorrichtung gemäss dem Oberbegriff des unabhängigen Patentanspruchs und eine Pumpeneinheit mit einer solchen Magnetlagervorrichtung.

Magnetlagervorrichtungen zur berührungslos magnetischen Lagerung eines Rotors haben den Vorteil, dass sie ohne mechanische Lager für den Rotor auskommen. Der Rotor wird mittels magnetischer Kräfte gelagert bzw. stabilisiert, die von einem Stator der Magnetlagervorrichtung generiert werden. Aufgrund der Abwesenheit von mechanischen Lagern eignen sich solche Magnetlagervorrichtungen insbesondere für Pump-, Misch-, Zentrifugier- oder Rührvorrichtungen, mit denen sehr empfindliche Substanzen gefördert werden, beispielsweise Blutpumpen, oder bei denen sehr hohe Anforderungen an die Reinheit gestellt werden, beispielsweise in der pharmazeutischen Industrie oder in der biotechnologischen Industrie, oder mit denen abrasive oder aggressive Substanzen gefördert werden, welche mechanische Lager sehr schnell zerstören würden, beispielsweise Pumpen oder Mischer für Slurry, Schwefel-, Phosphorsäure oder andere Chemikalien in der Halbleiterindustrie.

In der biotechnologischen Industrie werden solche Magnetlagervorrichtungen beispielsweise im Zusammenhang mit Bioreaktoren eingesetzt, z. B. bei Zentrifugalpumpen zum Fördern der Fluide in den oder aus dem Bioreaktor, oder bei Mischvorrichtungen, welche die Fluide in dem Bioreaktor durchmischen. In der Halbleiterindustrie werden solche Magnetlagervorrichtung nicht nur für das Fördern aggressiver oder abrasiver Substanzen verwendet, sondern beispielsweise auch für Rotationsvorrichtungen, mit denen Wafer rotiert werden.

Auch ist es bekannt, Magnetlagervorrichtungen für Viskosimeter zu verwenden.

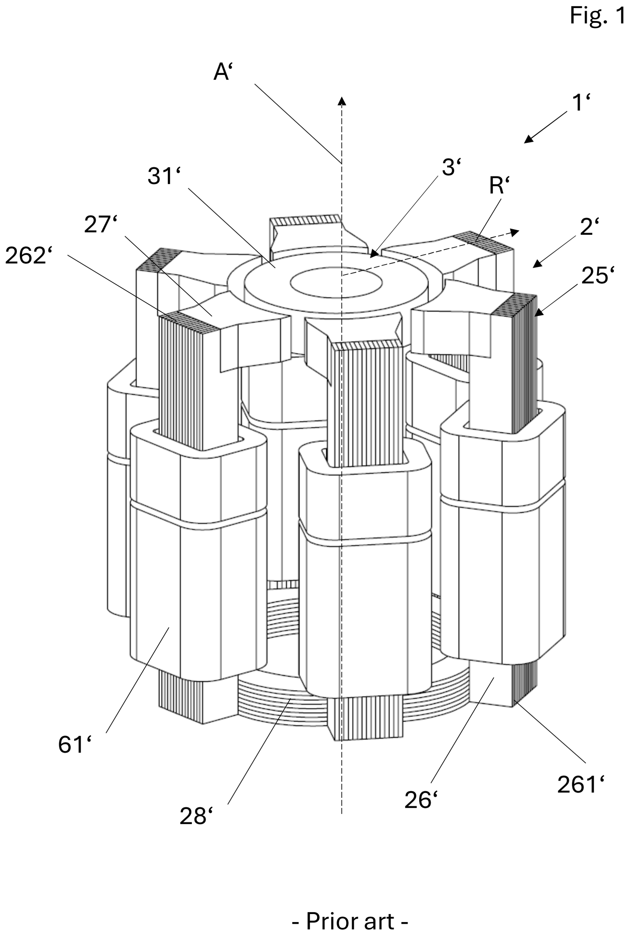

Eine vorteilhafte und an sich bekannte Ausführungsform einer Magnetlagervorrichtung ist die Ausführung in Tempelbauweise. Solch eine Magnetlagervorrichtung ist in Fig. 1 dargestellt. Die Bezugszeichen in Fig 1 sind jeweils mit einem Hochkomma versehen, um zu verdeutlichen, dass diese Komponenten zum Stand der Technik gehören.

Das Charakteristische der Tempelbauweise ist es, dass der Stator 2' der Magnetlagervorrichtung 1' eine Mehrzahl von Spulenkernen 25' aufweist, von denen jeder einen Längsschenkel 26' umfasst, der sich von einem ersten Ende 261' in einer axialen Richtung A' bis zu einem zweiten Ende 262' erstreckt. Mit der axialen Richtung A' ist dabei diejenige Richtung gemeint, welche durch die Solldrehachse des Rotors 3' definiert ist, welcher mit der Magnetlagervorrichtung 1' gelagert wird. Die Solldrehachse ist diejenige Drehachse, um welche der Rotor 3' im Betriebszustand rotiert, wenn er bezüglich des Stators 2' in einer zentrierten und unverkippten Position ist. Jeder Spulenkern 25' umfasst zusätzlich zu dem Längsschenkel 26' einen Querschenkel 27', auch Polstück genannt, welcher jeweils an dem zweiten Ende des Längsschenkels 262' angeordnet ist, und welcher sich in radialer Richtung R' - üblicherweise nach innen - erstreckt, wobei die radiale Richtung R' senkrecht zur axialen Richtung A' ist. Der Querschenkel 27' erstreckt sich also im Wesentlichen rechtwinklig zum Längsschenkel 26'. Die Spulenkerne 25' haben jeweils die Form eines L, wobei die Querschenkel 27' die kurzen Schenkel des L bilden. Der zu lagernde Rotor 3' ist dann zwischen den Querschenkeln 27' angeordnet.

Die Mehrzahl der Längsschenkel 26', die sich in axialer Richtung A' erstrecken und an die Säulen eines Tempels erinnern, hat dieser Bauweise ihren Namen gegeben.

In einer Ausführungsform, für die in Fig. 1 ein Beispiel gezeigt ist, hat der Stator 3' der Magnetlagervorrichtung 1' beispielsweise sechs Spulenkerne 25', die kreisförmig und äquidistant um eine becherförmige Ausnehmung (in Fig. 1 nicht explizit dargestellt) herum angeordnet sind, in welche der Rotor 3' eingesetzt werden kann. Die ersten Enden der Längsschenkel sind üblicherweise in Umfangsichtung durch einen Rückschluss 28' verbunden, welcher der magnetischen Flussführung dient. Der zu lagernde Rotor 3' umfasst einen magnetisch wirksamen Kern 31', beispielsweise eine permanentmagnetische Scheibe oder einen permanentmagnetischen Ring, der zwischen den radial innenliegenden Enden der Querschenkel 27' angeordnet ist und im Betriebszustand um die axiale Richtung A' rotiert, wobei der Rotor 3' berührungslos magnetisch bezüglich des Stators 2' gelagert ist.

Für solche Magnetlagervorrichtungen 1' ist es nicht notwendigerweise so, dass der magnetisch wirksame Kern des Rotors 31' permanentmagnetisch ausgestaltet sein muss. Es sind auch solche Ausgestaltungen bekannt, bei denen der magnetisch wirksame Kern 31' des Rotors 3' permanentmagnetfrei, also ohne Permanentmagnete ausgestaltet ist. Der magnetisch wirksame Kern des Rotors 31' ist dann beispielsweise ferromagnetisch ausgestaltet und besteht beispielsweise aus Eisen, Nickel-Eisen, Kobalt-Eisen, Silizium-Eisen, Mu-Metall oder einem anderen ferromagnetischen Werkstoff.

Ferner sind Ausgestaltungen möglich, bei denen der magnetisch wirksame Kern des Rotors 31' sowohl ferromagnetische Materialien als auch permanentmagnetische Materialien umfasst. Beispielsweise können Permanentmagnete in einen ferromagnetischen Grundkörper eingelegt bzw. eingesetzt werden. Solche Ausgestaltungen sind z.B. vorteilhaft, wenn man bei grossen Rotoren die Kosten durch Einsparen von permanentmagnetischem Material reduzieren will.

Um die für die berührungslos magnetische Lagerung des Rotors 3' notwendigen elektromagnetischen Felder zu erzeugen, tragen die Längsschenkel 26' Wicklungen 61'. Die Wicklungen 61' sind beispielsweise so ausgestaltet, dass um jeden Längsschenkel 26' herum eine konzentrierte Wicklung 61' gewickelt ist, das heisst, die Spulenachse jeder konzentrierten Wicklung 61' erstreckt sich jeweils in axialer Richtung A'. Dabei ist es typisch für die Tempelbauweise, dass die Spulenachsen der konzentrierten Wicklungen 61' in der axialen Richtung A' verlaufen und, dass die konzentrierten Wicklungen 61' nicht in der radialen Ebene R' angeordnet sind, in welcher der Rotor 3' bzw. der magnetisch wirksame Kern des Rotors 31' im Betriebszustand gelagert wird.

Es sind Ausgestaltungen möglich, bei denen auf jedem Längsschenkel 26' genau eine konzentrierte Wicklung 61' angeordnet ist. In anderen Ausgestaltungen sind auf jedem Längsschenkel 26' mehrere, beispielsweise genau zwei konzentrierte Wicklungen 61' vorgesehen. Auch sind Ausgestaltungen möglich, bei denen Wicklungen 61' vorgesehen sind, die um zwei in Umfangsrichtung benachbarte Längsschenkel 26' herumgewickelt sind, sodass sich diese beiden benachbarten Längsschenkel 26' beide im Innenraum der konzentrierten Wicklung 61' befinden.

Die gerade beschriebene Tempelbauweise ermöglicht eine gut bewährte, aus dem Stand der Technik bekannte Magnetlagervorrichtung 1', welche allerdings noch Verbesserungspotential aufweist. Bei Magnetlagervorrichtungen 1' in der Tempelbauweise ist es schwierig, diese ausreichend kompakt auszugestalten. Die Längsschenkel 26' und die konzentrierten Wicklungen 61' sind für den Betrieb der Magnetlagervorrichtung 1' in der Tempelbauweise von Nöten. Diese geben aber gleichzeitig auch die räumliche Ausdehnung der Vorrichtung vor. Somit ist es nicht ohne weiteres möglich, solch eine Magnetlagervorrichtung 1' für Anwendungen zu verwenden, welche z.B. aufgrund räumlicher Gegebenheiten wenig Platz für die Magnetlagervorrichtung 1' zur Verfügung haben. Umgekehrt heisst das, dass eine Magnetlagervorrichtung 1' in der Tempelbauweise für einen zuverlässigen Betrieb bei manchen Anwendungen nicht oder nur mit sehr hohem Aufwand ausreichend kompakt ausgestaltet werden kann.

Fehlende Kompaktheit der Magnetlagervorrichtung 1' führt auch dazu, dass für die Herstellung der einzelnen Komponenten viel Material benötigt wird. Somit weist die gesamte Vorrichtung 1' ein hohes Gewicht und höhere Kosten auf, was wiederum dazu führen kann, dass diese für manche Einsatzgebiete nicht optimal geeignet ist.

Weiterhin ist es oft herausfordernd, eine Magnetlagervorrichtung 1' in Tempelbauweise mit mehr als sechs Spulenkerne 25' auszugestalten. Wenn die Grösse des Rotors 3' bzw. des magnetisch wirksamen Kerns 31' nicht verändert werden kann, ist es somit schwer möglich, z.B. zwei weitere Spulenkerne 25' um die becherförmige Ausnehmung 211' herum einzusetzen. Des Weiteren sind durch das geringe Platzangebot die Längsschenkel 26' sehr nahe zueinander angeordnet, was zu Streuflüssen und somit hohen Eisenverlusten führen kann. Ein weiteres Problem, das zu hohen Eisenverlusten führen kann ist, dass durch die Bauweise der Längsschenkel 26' lange Magnetpfade entstehen. Diese sind jedoch nicht wünschenswert, da die entstehenden Verluste, letztendlich in Form von Wärme abgeleitet werden müssen, und somit die Effizienz der Magnetlagervorrichtung in Tempelbauweise sinkt.

Ausgehend von diesem Stand der Technik ist es daher eine Aufgabe der Erfindung, eine Magnetlagervorrichtung zur berührungslos magnetischen Lagerung eines Rotors mit einem scheibenförmigen oder ringförmigen magnetisch wirksamen Kern vorzuschlagen, welcher eine kompaktere Bauweise und gleichzeitig eine höhere Effizienz aufweist.

Ferner ist es eine Aufgabe der Erfindung, eine Pumpeneinheit mit einer solchen Magnetlagervorrichtung vorzuschlagen.

Der diese Aufgabe lösende Gegenstand der Erfindung ist durch die Merkmale des unabhängigen Patentanspruchs gekennzeichnet.

Erfindungsgemäss wird also eine Magnetlagervorrichtung vorgeschlagen zur berührungslos magnetischen Lagerung eines Rotors, der einen scheibenförmigen oder ringförmigen magnetisch wirksamen Kern aufweist, wobei die Magnetlagervorrichtung einen Stator umfasst, der sich in einer axialen Richtung erstreckt und eine becherförmige Ausnehmung aufweist, die an einem axialen Ende des Stators angeordnet ist, und in die der Rotor einsetzbar ist. Der Stator weist eine Mehrzahl von Spulenkernen auf, von denen jeder einen Verbindungsschenkel und ein Polstück aufweist, wobei sich jeder Verbindungsschenkel von einem ersten Ende bis zu einem zweiten Ende erstreckt, wobei das erste Ende an einem Rückschluss anliegt. Jedes Polstück weist eine zweite Kontaktfläche auf, die an dem zweiten Ende des Verbindungsschenkel anliegt, wobei sich jedes Polstück von der zweiten Kontaktfläche in einer radialen Richtung bis zu einer Stirnfläche erstreckt, wobei die radiale Richtung senkrecht zur axialen Richtung ist. Alle Stirnflächen sind um die becherförmige Ausnehmung herum angeordnet, und an jedem Verbindungsschenkel ist mindestens eine konzentrierte Wicklung angeordnet, welche den jeweiligen Verbindungsschenkel umgibt. Jeder Verbindungsschenkel erstreckt sich schräg zur axialen Richtung, sodass das zweite Ende jedes Verbindungsschenkels in radialer Richtung einen geringeren Abstand zur becherförmigen Ausnehmung aufweist als das erste Ende.

In anderen Worten, der Verbindungsschenkel weist eine radial nach innen gerichtete Erstreckung auf. Das heisst, der Verbindungsschenkel ist weder parallel noch senkrecht zur axialen Richtung ausgerichtet. Das heisst, eine Achse des Verbindungsschenkels schliesst mit der axialen Richtung einen Winkel ein, der grösser als 0° und kleiner als 90° ist. Bevorzugterweise liegt der Winkel zwischen 20° und 60°. Bevorzugterweise erstreckt sich die Achse des Verbindungsschenkels, welche den Winkel mit der axialen Richtung einschliesst, von einem ersten Mittelpunkt einer ersten Kontaktfläche des Verbindungsschenkels zu einem zweiten Mittelpunkt einer zweiten Kontaktfläche des Verbindungsschenkels, wobei die zweite Kontaktfläche an der Kontaktfläche des Polstücks angeordnet ist.

Durch diese Ausgestaltung der Magnetlagervorrichtung wird eine kompakte Magnetlagervorrichtung ermöglicht. Ebenso ist es vorteilhaft, dass es möglich ist, deutlich mehr Spulenkerne als bei dem, aus dem Stand der Technik bekannten Tempelmotor um die becherförmige Ausnehmung herum anzuordnen. Dies sorgt für eine, in Umfangsrichtung gesehen, breitere Abdeckung derjenigen Fläche des Rotors welche den Stirnflächen der Polstücke zugewandt ist, durch die Spulenkerne. Somit wird eine bessere Flussführung des Magnetfeldes erreicht.

Im Rahmen dieser Anmeldung wird unter einer becherförmigen Ausnehmung eine Ausnehmung verstanden, welche der Form eines Bechers ähnelt. Das heisst, in radialer Richtung weist die becherförmige Ausnehmung mindestens einen Durchmesser auf. Die äussere Form der becherförmigen Ausgestaltung kann zylindrisch, konisch oder aber durch eine Mischung aus beiden Formen ausgestaltet sein. Die becherförmige Ausnehmung kann sowohl einen geschlossenen Boden aufweisen wie auch einen offenen Boden bzw. gar keinen Boden. Es versteht sich, dass es möglich ist, dass die becherförmige Ausnehmung auch kleinere Artefakte, wie z.B. Öffnungen oder Vertiefungen aufweisen kann.

In einer bevorzugten Ausgestaltung verbindet der Rückschluss die ersten Enden aller Verbindungsschenkel.

Der Rückschluss sorgt für die magnetische Flussführung innerhalb der Magnetlagervorrichtung.

In einer bevorzugten Ausgestaltung ist der Rückschluss als eine Komponente ausgestaltet.

In einer bevorzugten Ausgestaltung weist der Rückschluss mehrere Segmente auf, wobei die Segmente bevorzugt geblecht aus Rückschlusselementen hergestellt sind, welche in axialer Richtung gestapelt sind.

Die Anzahl der Segmente ist bevorzugterweise zwölf. Es sind aber auch Ausgestaltungen möglich, bei denen die Anzahl geringer, z.B. sechs oder acht, oder höher, z.B. 16 oder 20 ist.

Die Segmentierung des Rückschlusses ist vorteilhaft vor allem bei der Produktion. Es lassen sich die Segmente und die daran angeordneten Verbindungsschenkel und Polstücke einzeln fertigen und am Ende zur gesamten Magnetlagervorrichtung zusammensetzen.

Die geblechte Ausgestaltung der Segmente reduziert die Wirbelstromverluste der Magnetlagervorrichtung.

Ebenso ist es möglich, dass der Rückschluss nicht aus Segmenten aufgebaut ist, aber trotzdem geblecht aus Rückschlusselementen hergestellt ist, welche in axialer Richtung gestapelt sind.

In einer bevorzugten Ausgestaltung sind alle Segmente des Rückschlusses aneinander anliegend angeordnet.

In einer bevorzugten Ausgestaltung sind alle Segmente des Rückschlusses aneinander anliegend ohne Luftspalt angeordnet.

Die Segmente weisen jeweils ein erstes Segmentende und ein zweites Segmentende in der Umfangsrichtung auf. In einer bevorzugten Ausgestaltung weist das Segment am ersten Segmentende eine erste Form auf und am zweiten Segmentende eine zweite Form, wobei die erste und zweite Form komplementäre Formen sind. In anderen Worten, die erste Form ist eine männliche Form und die zweite Form die weibliche Gegenform.

Das heisst, die beide Formen sind derart ausgestaltet, dass das erste Segmentende mit einem zweiten Segmentende eines ersten benachbarten Segments formschlüssig verbunden werden kann und das zweite Segmentende mit einem ersten Segmentende eines zweiten benachbarten Segments formschlüssig verbunden werden kann. Die erste und zweite Form sind somit als zwei ineinandergreifende Geometrien ausgestaltet. In anderen Worten, die erste Form ist eine männliche Form und die zweite Form die weibliche Gegenform.

Gemäss einer bevorzugten Ausgestaltung weisen die erste und zweite Form eine kreisförmige, halbkreisförmige oder ovale Ausgestaltung auf. Es sind aber auch andere geometrische Formen möglich.

Diese Ausgestaltungen haben den Vorteil, dass eine gewisse Flexibilität beim Zusammenfügen der einzelnen Segmente vorhanden ist, sodass diese z.B. gegeneinander bewegt werden können, sofern dies notwendig ist. Ebenso erleichtert dies den Austausch einzelner Segmente.

Gemäss einer bevorzugten Ausgestaltung weisen die erste und zweite Form in axialer Richtung eine stufenförmige Form auf, wobei die Stufen am ersten und zweiten Segmentende komplementär zueinander ausgestaltet sind.

Gemäss einer bevorzugten Ausgestaltung weist jedes Segment eine Bohrung in axialer Richtung durch das Segment und/oder eine Einwölbung auf.

Eine Bohrung kann dazu dienen, die Magnetlagervorrichtung auf einem Untergrund, z.B. einem Gehäuse mit Hilfe von Fixierungsmitteln, wie z.B. Schrauben oder Nieten zu fixieren. Die Position der Bohrungen ist dabei beispielhaft zu verstehen und kann auch an anderen Positionen der Segmente angeordnet sein. Einwölbungen im Rückschluss sind vorteilhaft z.B. wenn die Magnetlagervorrichtung in einem sehr engen (passgenauen) Gehäuse eingebracht wird. Sie können dann z.B. als Durchführungen für Leitungen oder aber zur besseren Verteilung von der Vergussmasse, sodass diese um den gesamten Stator herumfliessen kann.

In einer bevorzugten Ausgestaltung sind die Rückschlussunterfläche sowie auch die Rückschlussoberfläche in einer Ebene angeordnet, welche senkrecht zur axialen Richtung angeordnet ist.

In einer bevorzugten Ausgestaltung bilden die Segmente einen zusammenhängenden und/oder zusammengesetzten Ring, welcher den Rückschluss bildet und senkrecht zur axialen Richtung A angeordnet ist.

In einer bevorzugten Ausgestaltung weist der Rückschluss eine axiale Oberseite auf, wobei die ersten Enden der Verbindungsschenkel an dieser angeordnet sind. In anderen Worten, die Verbindungsschenkel sind auf dem Rückschluss angeordnet. Das heisst, eine erste Kontaktfläche der Verbindungsschenkel am ersten Ende erstreckt sich in einer radialen Ebene, wobei die axiale Oberseite des Rückschlusses in derselben radialen Ebene ist.

In einer bevorzugten Ausgestaltung weist der Rückschluss, eine radiale Innenseite auf, wobei die ersten Enden der Verbindungsschenkel an dieser angeordnet sind. In anderen Worten, die Verbindungsschenkel sind an der radial innenliegenden Seite bzw. Fläche des Rückschlusses angeordnet. Das heisst, die erste Kontaktfläche der Verbindungsschenkel am ersten Ende erstreckt sich vorwiegend in einer Ebene, welche senkrecht zur radialen Richtung angeordnet ist, und ist die erste Kontaktfläche zur radialen Innenseite des Rückschlusses.

In einer bevorzugten Ausgestaltung weist der Stator zwölf Spulenkerne auf und der Rotor weist eine Mehrzahl von Rotorpolen auf, bevorzugterweise acht Rotorpole, wobei die Rotorpole als vier Polpaare ausgestaltet sind.

Für die Ausgestaltung, in der der Rückschluss nicht segmentiert ist, sind die zwölf Spulenkerne alle an dem einen Rückschluss angeordnet. Es versteht sich, dass die Anzahl von zwölf Statorpolen rein beispielhaft zu verstehen ist, es können auch mehr oder weniger als zwölf Statorpole sein.

Für die Ausgestaltung mit dem segmentierten Rückschluss bedeutet das, dass bevorzugterweise auch zwölf Segmente des Rückschlusses vorhanden sind an welchen die zwölf Spulenkerne angeordnet sind. Anders ausgedrückt ist es in diesem Fall bevorzugt, dass ein Spulenkern immer mit einem Segment eine Einheit bildet, welche in Umfangsrichtung angeordnet den Rückschluss mit daran angeordneten Spulenkernen bildet.

Es ist aber auch ebenso möglich, dass an einem Segment des Rückschlusses mehr als ein Spulenkern angeordnet ist. So können z.B. in dieser Ausgestaltung auch sechs Segmente, wobei an jedem Segment zwei Spulenkerne angeordnet sind, den Stator welcher zwölf Spulenkerne aufweist, bilden.

In einer bevorzugten Ausgestaltung sind die Rückschlussunterfläche sowie auch die Rückschlussoberfläche jeweils in einer Ebene angeordnet, welche senkrecht zur axialen Richtung angeordnet ist.

In einer bevorzugten Ausgestaltung bilden die Segmente einen zusammenhängenden und/oder zusammengesetzten Ring, welcher den Rückschluss bildet und senkrecht zur axialen Richtung A angeordnet ist.

Die Anzahl der Spulenkerne und der Rotorpole kann auch geringer oder höher sein als die genannten zwölf Spulenkerne bzw. acht Rotorpole. Ebenso kann die Anzahl an Spulenkernen pro Segment grösser oder kleiner als die genannten zwei Spulenkerne sein.

In einer bevorzugten Ausgestaltung ist, die mindestens eine konzentrierte Wicklung konusförmig ausgestaltet.

Möglich dabei sind alle dem Fachmann aus dem Stand der Technik bekannten Wickelarten für konusförmige Wicklungen, wie auch z.B. eine stufenförmige Konuswicklung. Ebenso sind alle aus dem Stand der Technik bekannten Wicklungstechniken gemeint, bei denen durch den Lagenaufbau eine hohe Kompaktheit und ein hoher Füllfaktor erreicht wird bei gleichzeitig guter Herstellbarkeit. Hierzu zählen z.B. orthozyklische Wicklung, Drahtquerschnittausgestaltung wie z.B. Runddraht, Flachdraht oder Rechteckdraht, platzieren der Wicklungs-Anfänge und -Enden. Entsprechend können auch Wicklungsstränge seriell oder parallel geführt, und optional verdrillt werden. Auch entsprechende Isolationsmassnahmen wie Spulenhalter und Isolationsschichten sind selbstverständlich.

Ferner ist es bevorzugt, dass die mindestens eine konzentrierte Wicklung ein unteres Ende und ein oberes Ende aufweist, wobei das untere Ende dem ersten Ende des Verbindungsschenkels und das obere Ende dem zweiten Ende des Verbindungsschenkels zugewandt ist, wobei die mindestens eine konzentrierte Wicklung am unteren Ende einen ersten Aussendurchmesser und am oberen Ende einen zweiten Aussendurchmesser aufweist, wobei der erste Aussendurchmesser grösser als der zweite Aussendurchmesser ist.

Dies ist vorteilhaft, da eine flache Oberfläche des Stators an einem axialen Ende des Stators erreicht wird. Ohne die konusförmige Ausgestaltung der konzentrierten Wicklung wäre eine flache Oberfläche nicht vorhanden, da ansonsten die mindestens eine konzentrierte Wicklung eine Ausdehnung in axialer Richtung aufweisen würde, welche in axialer Richtung gesehen höher ist, als die Erstreckung einer Oberfläche des Polstücks. In anderen Worten, der höchste Punkt in axialer Richtung der konzentrierten Wicklung darf nicht den höchsten Punkt in axialer Richtung des Polstücks übertreffen. Diese beiden können maximal in ein und derselben radialen Ebene liegen.

Das heisst, ein Statorgehäuse, welches den Stator umschliesst, weist somit am axialen oberen Ende des Stators eine flache Oberfläche auf. In anderen Worten, die axial obere Oberfläche des Statorgehäuses befindet sich in einer radialen Ebene. Dies ist vorteilhaft für die Magnetlagervorrichtung, da dadurch ein besseres Zusammenwirken zwischen Stator und Rotor erreicht wird. Der Rotor bzw. der magnetisch wirksame Kern weist eine radiale Mittelebene auf, welche mit einer radialen Mittelebene des Polstücks zusammenfällt. Das heisst, die axiale Position des Rotors, wenn dieser in die becherförmige Ausnehmung eingesetzt wird, wird durch die axiale Position der Polstücke definiert. Aufgrund der erfindungsgemässen Ausgestaltung der Magnetlagervorrichtung wird ein Versatz zwischen dem Polstück bzw. der Polstückoberfläche und dem Rückschluss bzw. einer Rückschlussoberfläche in axialer Richtung erreicht. Durch diesen Versatz wird der Rotor somit in axialer Richtung in Bezug auf die axial obere Oberfläche des Statorgehäuses maximal nach oben, also in axialer Richtung weiter weg vom zweiten Ende des Stators, gehoben. Durch diese maximale Anhebung des Rotors in axialer Richtung kann der Rotor kompakter ausgestaltet werden, wodurch die Stabilität der Lagerung des Rotors im Stator verbessert wird.

Gerade wenn die Magnetlagervorrichtung für die Lagerung von Rotoren, an welchen mindestens ein Flügel angeordnet ist, ist dies vorteilhaft. Solche Rotoren werden z.B. für den Einsatz als Pumpe und/oder Mischer eines Fluids, verwendet. Wenn der Rotor bei solch einer Anwendung die maximale Anhebung aufweist, so kann der mindestens eine Flügel eine geringere Erstreckung in axialer Richtung aufweisen, wodurch gerade in axialer Richtung weiter oben am Flügel bzw. Rotor angreifende Kräfte verhindert werden. Dadurch werden Kippmomente verringert und die Lagerung des Rotors ist gut und zuverlässig gewährleistet.

Ebenso ist es bei Zentrifugen, Rotationsfiltern oder Querstromlüftern möglich, dass zwei erfindungsgemässe Magnetlagervorrichtungen oder eine Kombination einer erfindungsgemässen Magnetlagervorrichtung mit anderen Magnetlagervorrichtung für die gemeinsamen Lagerung eines Rotors an beiden Rotorenden verwendet werden kann. Auch bei diesen Anwendungen kann durch die erfindungsgemässe Magnetlagervorrichtung der Rotor vorteilhaft kurz ausgestaltet werden, was zusätzlich die Biegeresonanzfrequenz des Rotors vorteilhaft erhöht und aus dem Bereich der Betriebsfrequenzen verdrängt.

Weiterhin ist diese konusförmige Ausgestaltung der mindestens einen konzentrierten Wicklung vorteilhaft für die Kompaktheit der Magnetlagervorrichtung. Dadurch ist es möglich, die Spulenkerne flexibler anordnen zu können. Zum Beispiel können die einzelnen Polstücke und deren Verbindungsschenkel und die daran angeordneten Wicklungen dichter aneinander angeordnet werden, was zu einer Verbesserung der magnetischen Flussführung zwischen Stator und Rotor sorgt.

In einer bevorzugten Ausgestaltung ist das Polstück aus einem weichmagnetischen Werkstoff hergestellt.

Dabei ist es bevorzugt, dass die Polstücke aus Elektroblech hergestellt sind. Unter einem Elektroblech wird nach der allgemeinen Definition ein weichmagnetischer Werkstoff für Magnetkerne verstanden. Als weichmagnetische Werkstoffe bezeichnet man üblicherweise Werkstoffe, welche eine tiefe Koerzitivfeldstärke aufweisen. Die Koerzitivfeldstärke ist diejenige magnetische Feldstärke, die man benötigt, um einen Stoff zu entmagnetisieren. Im Rahmen dieser Anmeldung wird unter einem weichmagnetischen Werkstoff ein Material verstanden, welches eine Koerzitivfeldstärke, genauer gesagt eine Koerzitivfeldstärke der magnetischen Polarisation aufweist, die weniger als 2'000 A/m beträgt. Weitere geeignete weichmagnetische Materialien sind beispielsweise ferromagnetische oder ferrimagnetische Materialien, also insbesondere Eisen, Nickel-Eisen, Kobalt-Eisen Silizium-Eisen oder Mu-Metall.

Es ist ebenso möglich, die Verbindungsschenkel wie auch den Rückschluss aus weichmagnetischen Werkstoffen herzustellen.

In einer bevorzugten Ausgestaltung ist das Polstück geblecht aus Polelementen hergestellt, wobei die Polelemente in axialer Richtung gestapelt sind.

Ferner ist es bevorzugt, dass jeder Verbindungsschenkel geblecht aus Elementen hergestellt ist, wobei die Elemente in Umfangsrichtung des Stators gestapelt sind.

Ein Vorteil der geblechten Ausgestaltung ist, dass sie für eine Reduktion der Wirbelstromverluste im jeweiligen Bauteil (Rückschluss, Verbindungsschenkel, Polstück) sorgt.

Die meisten Wirbelstromverluste treten an den Polstücken auf, da der Abstand benachbarter Polstücke, insbesondere an deren der becherförmigen Ausnehmung zugewandten Enden besonders klein ist. Am Polstück treten die Felder zunächst in radialer Richtung aus. Durch die Stapelung der Elemente des jeweiligen Bauteils werden Wirbelströme wirkungsvoll reduziert. Die Felder zweier in Umfangsrichtung des Stators benachbarter Polstücke treten auch in Umfangsrichtung aus diesen aus. Somit muss eine Stapelung der jeweiligen Elemente gewählt werden, um Wirbelströme auch in Umfangsrichtung wirkungsvoll verhindern zu können. Dies ist bei den Polstücken idealerweise durch die Stapelung der Polelemente in axialer Richtung möglich. Ebenso kann als Alternative das Polstück aus weichmagnetischem Werkstoff (engl. «soft magnetic materials», kurz «SMC») hergestellt sein. Dies sorgt für einen ähnlichen Effekt. Insgesamt führen diese Ausführungen dazu, dass die Wirbelstromverluste drastisch reduziert. Dadurch ergibt sich ein weiterer wichtiger Vorteil. Die Stirnflächen der Polstücke können in Umfangsrichtung deutlich näher aneinander angeordnet werden da Felder, welche in Umfangsrichtung vom Polstück eines ersten Spulenkern zum Polstück eines zweiten, benachbarten Spulenkern fliessen parallel zu den in axialer Richtung gestapelten Polelementen fliessen und somit keine Wirbelstromverluste erzeugen. Somit können z.B. die passive Steifigkeit und die aktiven Lagerkräfte verbessert werden und/oder eine kompaktere Bauweise des Stators ist möglich.

Der Wechsel der Orientierung der geblechten Ausgestaltung zwischen den einzelnen Bauteilen (Rückschluss, Verbindungsschenkel, Polstück) sorgt nochmals für eine weitere Reduktion der Wirbelstromverluste der gesamten Magnetlagervorrichtung.

In bevorzugten Ausgestaltungen sind die Rückschlusselemente axial geblecht (also in axialer Richtung gestapelt), der am Rückschluss angeordnete Verbindungsschenkel weist dann in Umfangsrichtung gestapelte Elemente auf und das daran angeordnete Polstück weist wiederum axial gestapelte Polelemente auf. Durch diese Anordnung und den Wechsel der Orientierungen wird dafür gesorgt, dass die Verluste in der Magnetlagervorrichtung reduziert werden.

Die in Umfangsrichtung gestapelten Elemente der Verbindungsschenkel weisen den Vorteil auf, dass hierbei geringere Verluste auftreten und der magnetische Widerstand verkleinert wird, verglichen mit einer Stapelung der Elemente der Verbindungsschenkel in axialer Richtung. Der Grund hierfür ist, dass das Magnetfeld bei den in Umfangsrichtung gestapelten Elementen nicht durch die Blechebenen in axialer Richtung hindurchtreten muss. Das heisst umgekehrt, wäre der Verbindungsschenkel in axialer Richtung geblecht, müsste das Magnetfeld in axialer Richtung durch die Grenzen zwischen benachbarten Blechebenen hindurch fliessen und würde sowohl Verluste generieren als auch einen erhöhten magnetischen Widerstand erfahren.

Ferner ist es möglich, dass das Polstück und/oder der Verbindungsschenkel aus ein Pulververbundwerkstoff, insbesondere einem weichmagnetischer Pulververbundwerkstoff hergestellt sind. Dabei können diese, im Englischen "Soft Magnetic Composite (SMC)" genannten Werkstoffe hochreine Eisenpulver mit einer speziellen Oberflächenbeschichtung sein. Die spezielle Oberflächenbeschichtung ist in diesem Fall elektrisch isolierend. SMCs sind vor allem für ihre Anwendung bei der Führung von hochfrequenten magnetischen Feldern (Frequenz >> 1 kHz) bekannt. Eine Anwendung bei niedrigeren Frequenzen ist allerdings bisher nicht bekannt. Mit einer niedrigeren Frequenz sind Frequenzen gemeint die kleiner als 65 Hz sind.

Weitere Vorteile der weichmagnetischen Pulververbundwerkstoffe sind, dass sie eine sehr gute Fähigkeit zur dreidimensionalen Flussführung aufweisen und einen hohen elektrischen Widerstand und eine hohe Permeabilität besitzen und somit praktisch kaum Wirbelstromverluste aufweisen. Gerade die Fähigkeit zur dreidimensionalen Flussführung, ohne dass dabei hohe Wirbelstromverluste erzeugt werden, sorgt dafür, dass vorzugsweise weichmagnetische Pulververbundwerkstoffe für das Polstück und/oder den Verbindungsschenkel verwendet werden.

Da weichmagnetische Pulververbundwerkstoffe vergleichsweise hohe Hystereseverluste aufweisen, wird in manchen Ausführungsformen weichmagnetischer Pulververbundwerkstoff zur Herstellung der Polstücke und/oder Verbindungsschenkel verwendet. Dadurch findet sich ein ausgewogenes Mittel zwischen der Reduktion der Wirbelstromverluste an den Stellen, an welchen sie besonders gross sind, zum unerwünschten Einfluss des Pulververbundwerkstoffs auf den Magnetkreis.

Das Anbringen eines Polstücks an einen Verbindungsschenkel und das Anbringen des Verbindungsschenkels an den Rückschluss können durch mehrere mögliche Fügearten erfolgen. Diese umfassen unter anderem eine kraftschlüssige Fügeart, wie z.B. Klemmen oder Crimpen, eine formschlüssige Fügeart, wie z.B. Schrauben oder Stecken oder eine stoffschlüssige Verbindung, wie z.B. Kleben oder Schweissen. Ebenso ist es möglich, die Verbindungen über Nut-Feder-Verbindungen und/oder Spundungen, wie z.B. Zapfen, Zinken oder Schwalbenschwanzverbindungen herzustellen. In einer bevorzugten Ausführungsform wird die stoffschlüssige Fügeart durch Kleben umgesetzt. Dies hat den Vorteil gegenüber Klemmen oder Schrauben, dass keine Spannungsüberhöhungen im Pulverkompositwerkstoff auftreten. Hingehen haben die kraftschlüssigen und formschlüssigen Fügearten den Vorteil, dass diese eine geringe Defektanfälligkeit, die durch z.B. Alterung oder Fehler beim Verkleben auftreten, aufweisen.

In einer bevorzugten Ausgestaltung ist die Stirnfläche des Polstücks als gekrümmte Fläche ausgestaltet. Besonders bevorzugt ist dabei, dass die Krümmung bzw. die Rundung der Stirnfläche koaxial zur becherförmigen Ausnehmung ausgestaltet ist. In anderen Worten, die Stirnfläche des Polstücks ist ein Segment einer Zylinderoberfläche, wobei die Mittelachse dieses Zylinders mit der Mittelachse der becherförmigen Ausnehmung zusammenfällt und dessen Radius grösser ist als der der becherförmigen Ausnehmung, sodass die Stirnfläche nicht in die becherförmige Ausnehmung hineinragt.

In einer bevorzugten Ausgestaltung ist die Stirnfläche bezüglich der Umfangrichtung breiter ausgestaltet als die maximale Erstreckung der Kontaktfläche in Umfangsrichtung. Das bedeutet, dass eine der beiden Kanten der Stirnfläche, welche sich in Umfangsrichtung erstrecken, länger ist als eine der Kanten der Kontaktfläche, welche sich in Umfangsrichtung erstrecken. Ist die Stirnfläche als gekrümmte Fläche ausgestaltet, so ist die Länge einer der Kreisbögen des Segments der Zylinderoberfläche in der radialen Ebene grösser als die Länge einer der Kanten der Kontaktfläche, welche sich in Umfangsrichtung erstrecken.

Diese Verbreiterung der Stirnfläche in Umfangrichtung hat den Vorteil, dass dadurch die magnetische Funktionalität begünstigt wird. Zum Beispiel können die passive Steifigkeit und die aktiven Lagerkräfte verbessert werden.

Gemäss einer weiteren bevorzugten Ausgestaltung ist die Stirnfläche bezüglich der Umfangrichtung schmaler ausgestaltet als die maximale Erstreckung der Kontaktfläche in Umfangsrichtung. Das bedeutet, dass eine der beiden Kanten der Stirnfläche, welche sich in Umfangsrichtung erstrecken, kürzer ist als eine der Kanten der Kontaktfläche, welche sich in Umfangsrichtung erstrecken.

Gemäss einer bevorzugten Ausgestaltung weist die Stirnfläche an einer Kante, welche den Übergang zur Polstückoberfläche darstellt, einen Formübergang, bevorzugterweise eine Abrundung oder eine Stufe, auf auf. In anderen Worten, die Kante, welche sich am axial oberen Ende der Stirnfläche des Polstücks befindet und ebenso die radial innenliegende Kante der Polstückoberfläche darstellt, weist einen Formübergang auf. Unter einem Formübergang kann einerseits verstanden werden, dass der Übergang von der Stirnfläche zur Polstückoberfläche an der Kante einen Radius aufweist. Man kann auch sagen, dass die Kante gebrochen ist. Ist das Polstück geblecht aus Polelementen ausgestaltet, die in axialer Richtung gestapelt sind, so kann das Polstück ebenso einen Formübergang aufweisen. In diesem Fall kann neben den gerade genannten Formübergängen auch unter einem Formübergang verstanden werden, dass mindestens eines der Polelemente, welche sich am axial oberen Ende des Polstücks befinden, eine geringere Erstreckung in radialer Richtung aufweisen als die übrigen Elemente. In anderen Worten, dieses mindestens eine Polelement ist in radialer Richtung vom Rotor aus gesehen gegenüber den anderen Polelementen zurückversetzt, das heisst, es weist einen grösseren Abstand zum Rotor auf als die übrigen Polelemente.

Gemäss einer bevorzugten Ausgestaltung weist die Stirnfläche mindestens einen Schlitz auf, welcher sich in axialer Richtung erstreckt. Das heisst, in anderen Worten, dass sich der mindestens eine Schlitz in jeglicher Länge in der Stirnfläche in axialer Richtung erstrecken kann.

Ferner ist es bevorzugt; dass mehrere Schlitze parallel oder näherungsweise parallel zueinander in der Stirnfläche angeordnet sind.

Die Anordnung der mehreren Schlitze parallel zueinander ist vorteilhaft, da sie dadurch auch parallel oder zumindest näherungsweise parallel zum Verlauf des magnetischen Felds angeordnet sind, sodass sie diesen nicht blockieren.

Ferner ist es bevorzugt, dass sich der mindestens eine Schlitz von der Polstückoberfläche zur Polstückunterfläche erstreckt. Diese Erstreckung wäre somit die maximal mögliche Erstreckung eines Schlitzes in der Stirnfläche in axialer Richtung.

Für eine mögliche Ausgestaltung, in der die Stirnfläche mehr als einen Schlitz aufweist ist es möglich, dass sich ein Schlitz von der Polstückunterfläche in axialer Richtung erstreckt und ein zweiter Schlitz sich von der Polstückoberfläche in zum ersten Schlitz entgegengesetzter axialer Richtung erstreckt. Dabei ist es möglich, dass die beiden Schlitze jeweils eine Erstreckung in axialer Richtung aufweisen, die kleiner ist als 50% der Erstreckung der Stirnfläche in axialer Richtung. Das heisst, in anderen Worten die Stirnfläche weist zwei Schlitze auf, die sich in der Mitte der Stirnfläche nicht berühren und sich somit dort mindestens ein Polelement des Polstücks befindet, welches nicht vom Schlitz erfasst wird.

Das Einbringen von mindestens einem Schlitz in die Stirnfläche des Polstücks stellt eine elektrische Isolation dar. Das heisst, der mindestens eine Schlitz sorgt dafür, dass der Pfad der Wirbelströme in den Polelementen unterbrochen und somit blockiert wird. Somit können Wirbelströme, die durch in axialer Richtung aus den Polelementen austretende Magnetfelder resultieren verhindert bzw. reduziert werden. Dies hat zur Folge, dass lediglich kleine Wirbelströme im Polstück verbleiben und die Wirbelstromverluste im Polstück insgesamt drastisch reduziert werden.

Die Fertigung der Schlitze, kann über diverse Methoden erfolgen. Zu diesen zählen unter anderem mechanische Verfahren, wie z.B. Fräsen, Stanzen oder Schneiden, wobei zu letzterem auch der Einsatz von Lasern und/oder Wasserstrahlschneidern und/oder Drahterodieren zählt.

Gemäss einer besonders bevorzugten Ausführungsform ist der Stator der Magnetlagervorrichtung zur Erzeugung eines Drehmoments ausgestaltet, mit welchem der Rotor berührungslos magnetisch zur Rotation um die axiale Richtung antreibbar ist.

Hierbei ist der Stator als Lager- und Antriebsstator ausgestaltet, der sowohl Stator des elektrischen Antriebs als auch Stator der magnetischen Lagerung ist. Mit den elektrischen Wicklungen des Stators lässt sich ein magnetisches Drehfeld erzeugen, welches zum einen ein Drehmoment auf den Rotor ausübt, das dessen Rotation um eine Solldrehachse bewirkt, und welches zum anderen eine beliebig einstellbare Querkraft auf den Rotor ausübt, sodass dessen radiale Position aktiv steuerbar bzw. regelbar ist.

Gerade im Hinblick auf die Ausführungsform, bei welcher die Magnetlagervorrichtung zur Erzeugung eines Drehmoments ausgestaltet ist, ist die Ausgestaltung mit der breiteren Stirnfläche von Vorteil, da dadurch die magnetische Funktionalität begünstigt wird. Zum Beispiel kann ein erhöhtes Drehmoment erzeugt werden oder die passive Steifigkeit oder die aktiven Lagerkräfte können verbessert werden.

In einer bevorzugten Ausgestaltung umfasst die Magnetlagervorrichtung eine Mehrzahl von Sensoren zur Bestimmung der Rotorposition und/oder Drehwinkel des Rotors. Bevorzugterweise ist zwischen jedem zweiten Statorpol ein Sensor angeordnet. Die Sensoren können aber auch an anderen Positionen der Magnetlagervorrichtung angeordnet sein. Die Anzahl der Sensoren liegt bevorzugt zwischen 4-8, es können aber auch mehr oder auch weniger Sensoren in der Magnetlagervorrichtung vorhanden sein.

Gemäss einer bevorzugten Ausgestaltung ist die Magnetlagervorrichtung als elektromagnetischer Drehantrieb oder als Mischvorrichtung oder als Zentrifuge oder als Querstromlüfter oder als Rotationsfilter oder als Viskosimeter ausgestaltet.

Das heisst die erfindungsgemässe Magnetlagervorrichtung kann für diverse Fluidbeförderungseinheiten, wie die gerade genannten, ausgestaltet bzw. eingesetzt werden. Dabei umfasst die Fluidbeförderungseinheit den Rotor, wobei der Rotor durch Drehung einem Fluid Energie zuführt und somit in Bewegung versetzt.

Durch die Erfindung wird ferner ein elektromagnetischer Drehantrieb, welcher auch als Kuppelmotor bezeichnet wird, vorgeschlagen, wobei der elektromagnetische Drehantrieb eine erfindungsgemässe Magnetlagervorrichtung umfasst, sowie einen Rotor mit einem scheibenförmigen oder ringförmigen magnetisch wirksamen Kern, wobei der Rotor in die becherförmige Ausnehmung einsetzbar ist, und wobei der Rotor als Rotor des elektromagnetischen Drehantriebs ausgestaltet ist.

Solche elektromagnetischen Drehantriebe sind auch unter dem Begriff des lagerlosen Motors bekannt. Mit dem Begriff lagerloser Motor ist dabei ein elektromagnetischer Drehantrieb gemeint, bei welchem der Rotor vollkommen magnetisch bezüglich des Stators gelagert ist, wobei keine separaten magnetischen Lager vorgesehen sind.

Durch die Erfindung wird ferner eine Pumpeneinheit für eine erfindungsgemässe Magnetlagervorrichtung vorgeschlagen, wobei die Pumpeneinheit den Rotor umfasst und die Pumpeneinheit ein Pumpengehäuse mit einem Einlass und mit einem Auslass für ein zu förderndes Fluid aufweist. Der Rotor ist in dem Pumpengehäuse angeordnet, wobei der Rotor eine Mehrzahl von Flügeln zum Fördern des Fluids aufweist. Das Pumpengehäuse begrenzt einen Pumpenraum, wobei das Pumpengehäuse ein Deckelteil und ein Bodenteil aufweist. Das Bodenteil weist einen zylindrischen oder konischen Becher zur Aufnahme des Rotors auf, welcher Becher in die becherförmige Ausnehmung des Stators einsetzbar ist.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigen:
- Fig. 1:: eine perspektivische Darstellung einer aus dem Stand der Technik bekannten Magnetlagervorrichtung nach der Tempelbauweise,
- Fig. 2:: eine perspektivische Darstellung eines ersten Ausführungsbeispiels einer erfindungsgemässen Magnetlagervorrichtung,
- Fig. 3:: eine schematische Schnittdarstellung des Ausführungsbeispiels aus Fig. 2,
- Fig. 4:: eine schematische Schnittdarstellung des Ausführungsbeispiels aus Fig. 2 mit einem Statorgehäuse,
- Fig. 5:: eine perspektivische Darstellung eines Segments mit daran angeordnetem Spulenkern und konzentrierter Wicklung aus Fig. 2,
- Fig. 6:: eine schematische Schnittdarstellung des Segments mit daran angeordnetem Spulenkern und konzentrierter Wicklung aus Fig. 5,
- Fig. 7:: eine perspektivische Darstellung einer zweiten Ausführungsform eines Segments mit daran angeordnetem Spulenkern,
- Fig. 8: eine perspektivische Darstellung einer dritten Ausführungsform eines Segments mit daran angeordnetem Spulenkern,
- Fig. 9: eine Draufsicht auf ein zweites Ausführungsbeispiels einer erfindungsgemässen Magnetlagervorrichtung,
- Fig. 10: eine schematische Schnittdarstellung des zweiten Ausführungsbeispiels aus Fig. 9,
- Fig. 11: eine perspektivische Darstellung einer weiteren Ausführungsform eines Polstücks,
- Fig. 12: eine Schnittdarstellung einer erfindungsgemässen Magnetlagervorrichtung mit darin eingesetzter Pumpeneinheit,
- Fig. 13: eine perspektivische Schnittdarstellung einer erfindungsgemässen Magnetlagervorrichtung mit darin eingesetzter Mischereinheit, und
- Fig. 14: eine schematische Darstellung der Verdrahtung einer erfindungsgemässen Magnetlagervorrichtung 1, zur Ansteuerung und Regelung dieser.

Wie bereits vorangehend erläutert, zeigt Fig. 1 eine perspektivische Darstellung einer aus dem Stand der Technik bekannten Magnetlagervorrichtung 1' nach der Tempelbauweise.

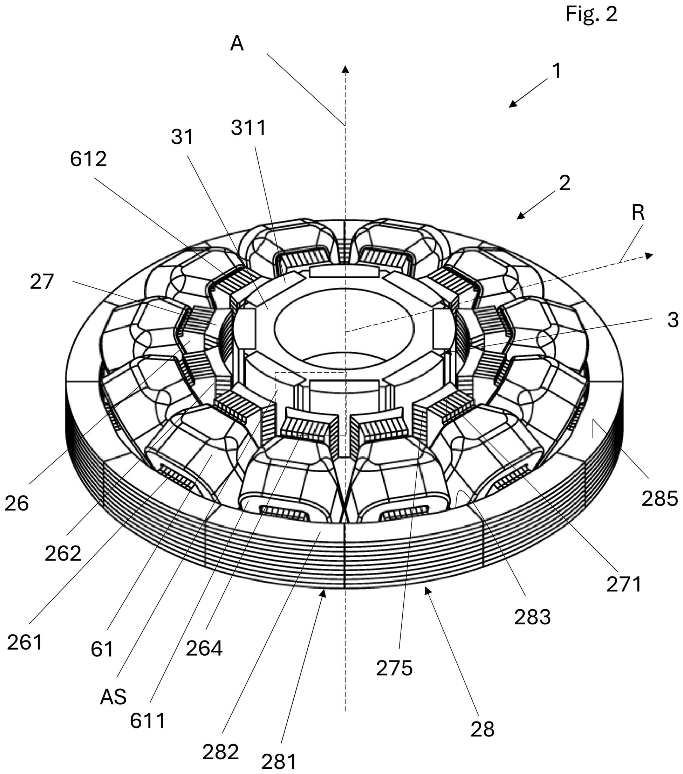

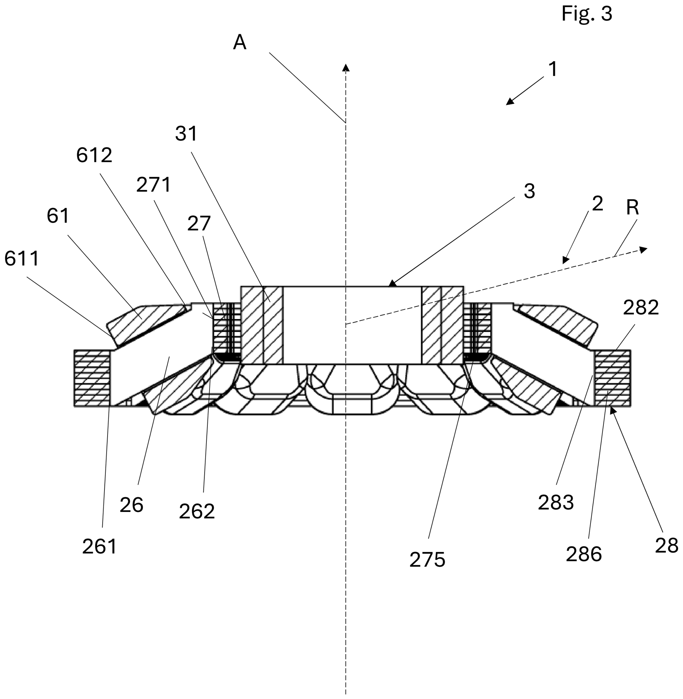

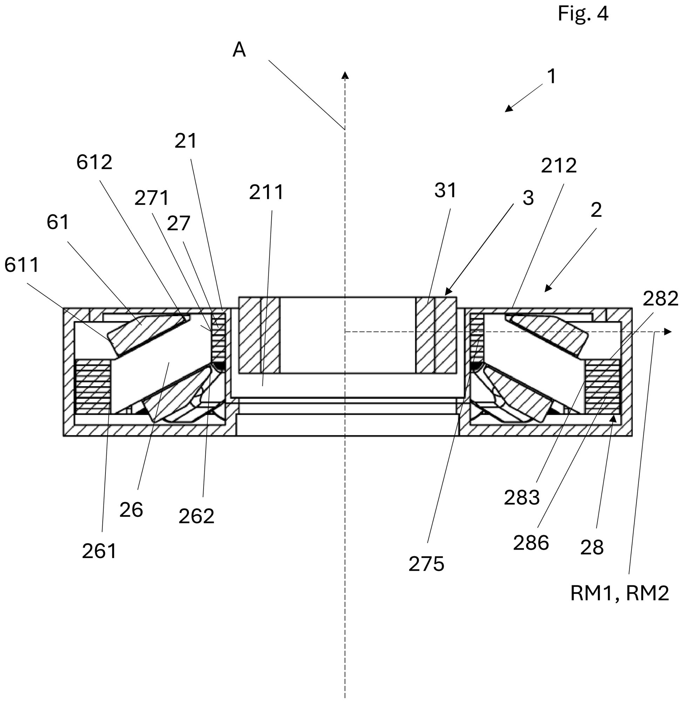

Fig. 2 zeigt eine perspektivische Darstellung eines ersten Ausführungsbeispiels einer erfindungsgemässen Magnetlagervorrichtung, die gesamthaft mit dem Bezugszeichen 1 bezeichnet ist. In Fig. 3 ist eine schematische Schnittdarstellung des ersten Ausführungsbeispiels aus Fig. 2 gezeigt. Die Magnetlagervorrichtung 1 ist für die berührungslos magnetische Lagerung eines Rotors 3 ausgestaltet, der einen scheibenförmigen oder ringförmigen magnetisch wirksamen Kern 31 umfasst. Die Magnetlagervorrichtung 1 umfasst einen Stator 2. Üblicherweise umfasst der Stator 2 ein Statorgehäuse 21 (Fig. 4), welches in Fig. 2 aus Gründen der besseren Übersicht allerdings nicht dargestellt ist. Daher veranschaulicht Fig. 4 in einer schematischen Schnittdarstellung das Ausführungsbeispiel aus Fig. 2 mit einem Statorgehäuse 21. Fig. 4 soll lediglich der Anschauung dienen, um zu zeigen, wie eine für den Betrieb der Magnetlagervorrichtung 1 notwendige Umkapselung des Inneren des Stators 2 aussieht. Aus diesem Grund sind die anderen Komponenten des Stators 2 nur schematisch dargestellt und rein anschaulich zu verstehen.

Beim Betrieb der Magnetlagervorrichtung 1 in Bereichen in denen z.B. chemisch aggressive Substanzen zum Einsatz kommen, ist es wichtig, dass das Innere des Stators 2 sicher umkapselt ist und somit vor diesen Substanzen geschützt wird. Damit trotzdem ein Rotor 3 verwendet werden kann, weist das Statorgehäuse 21 an einem axialen Ende eine becherförmige Ausnehmung 211 auf, in welche der Rotor 3 einsetzbar ist.

Der Teil des Statorgehäuses 21, welcher sich nahe der konzentrierten Wicklungen 61 am oberen axialen Ende AE1 des Stators 2 befindet und der Teil des Statorgehäuses 21, welcher der becherförmigen Ausnehmung 211 zugewandt ist, wird bevorzugt aus einem verlustarmen Material, besonders bevorzugt aus einem elektrisch nicht oder nur wenig leitenden Material, wie z.B. Kunststoffen gefertigt. Die anderen Teile des Statorgehäuses 21 werden bevorzugt aus einem thermisch gut leitenden Material wie z.B. Aluminium gefertigt.

Das Statorgehäuse 21 ist bevorzugterweise hermetisch abgedichtet bzw. je nach Ausgestaltung des Gehäuses 21 bereits bei Produktion hermetisch dicht ausgestaltet, sodass keine für das Innere der Magnetlagervorrichtung 1 schädlichen Stoffe in Kontakt mit dem Stator 2 kommen können. Es sind auch Ausführungsbeispiele möglich, bei denen das Gehäuse 21 Beschichtungen aufweist, z.B. eine oder mehrere Polymerbeschichtungen, welche chemisch beständig bzw. resistent sind.

Im Statorgehäuse 21 kann auch eine Kühlvorrichtung vorgesehen sein, welche die Magnetlagervorrichtung 1, insbesondere den Stator 2 kühlt und somit vor Überhitzung schützt.

Das Statorgehäuse 21 kann mit einer Vergussmasse ausgefüllt werden, welche den Stator 2 einerseits an einer vorbestimmten Position fixiert und andererseits zur thermischen Regulierung des Stators 2 bzw. der Magnetlagervorrichtung 1 beiträgt.

Die Elektronik für den Betrieb der Magnetlagervorrichtung 1 kann entweder intern, d.h. im Statorgehäuse 21 angeordnet sein oder aber ganz oder teilweise extern z.B. in einem separaten Elektronikbauteil. Das Elektronikbauteil kann z.B. abseits der Magnetlagervorrichtung 1 über eines oder mehrere Kabel verbunden angeordnet sein oder z.B. an der Aussenwand des Gehäuses 21 angebracht sein. Die Elektronik beinhaltet unter anderem nicht nur alle Komponenten für die Lagerung und den Antrieb des Rotors, sondern auch z.B. für die Sensorik.

Der Rotor 3 ist zur Rotation um eine Solldrehachse ausgestaltet. Diese Solldrehachse definiert eine axiale Richtung A. Üblicherweise stimmt die Mittelachse des Stators 2, welche sich in der axialen Richtung A erstreckt, mit der Solldrehachse überein. Die Solldrehachse bezeichnet dabei diejenige Achse, um welche sich der Rotor 3 im Betriebszustand dreht, wenn sich der Rotor 3 bezüglich des Stators 2 in einer zentrierten und unverkippten Lage befindet, so wie dies in Fig. 2 dargestellt ist.

Der Stator 2 weist eine Mehrzahl von Spulenkernen 25 - hier 12 Spulenkerne - auf, von denen jeder einen Verbindungsschenkel 26 und ein Polstück 27 aufweist. Jeder Verbindungsschenkel 26 erstreckt sich von einem ersten Ende 261 bis zu einem zweiten Ende 262. Das erste Ende 261 liegt an einem Rückschluss 28 an. Der Rückschluss 28 weist in diesem Ausführungsbeispiel mehrere Segmente 281 - hier zwölf Segmente 281 -, eine axiale Oberseite 281 und eine radiale Innenseite 283 auf. Die Anzahl an Segmenten 281 in diesem Ausführungsbeispiel ist rein exemplarisch. Der Rückschluss 28 kann auch mehr oder weniger als zwölf Segmente 281 umfassen. In bevorzugten Ausführungsbeispielen ist die Anzahl der Spulenkerne 25 ist gleich der Anzahl an Segmenten 281, da an jedem Segment 281 immer ein Spulenkern 25 angeordnet ist.

Der Rückschluss 28 bzw. in diesem ersten Ausführungsbeispiel die Segmente 281 sind geblecht aus Rückschlusselementen 286 hergestellt, welche in axialer Richtung A gestapelt sind.

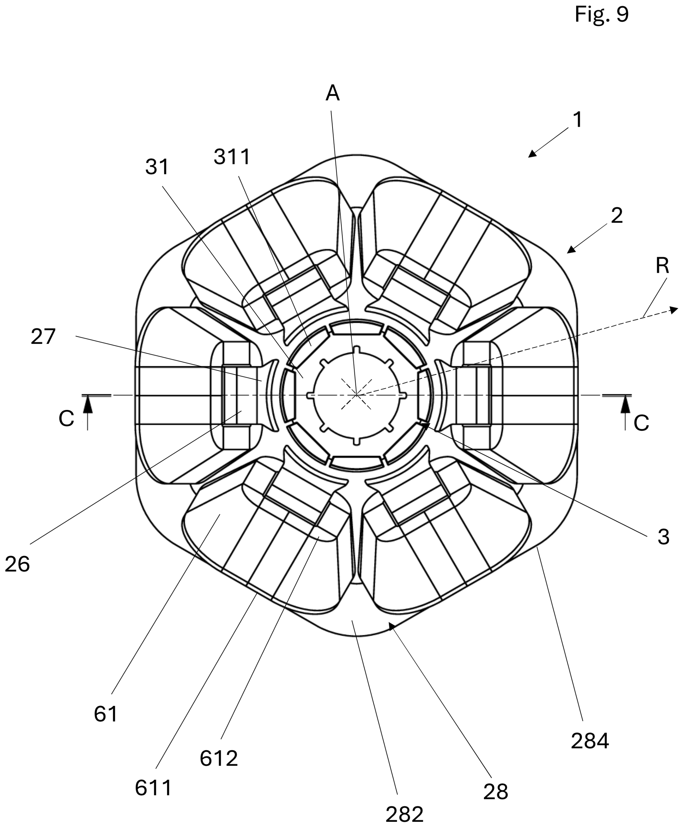

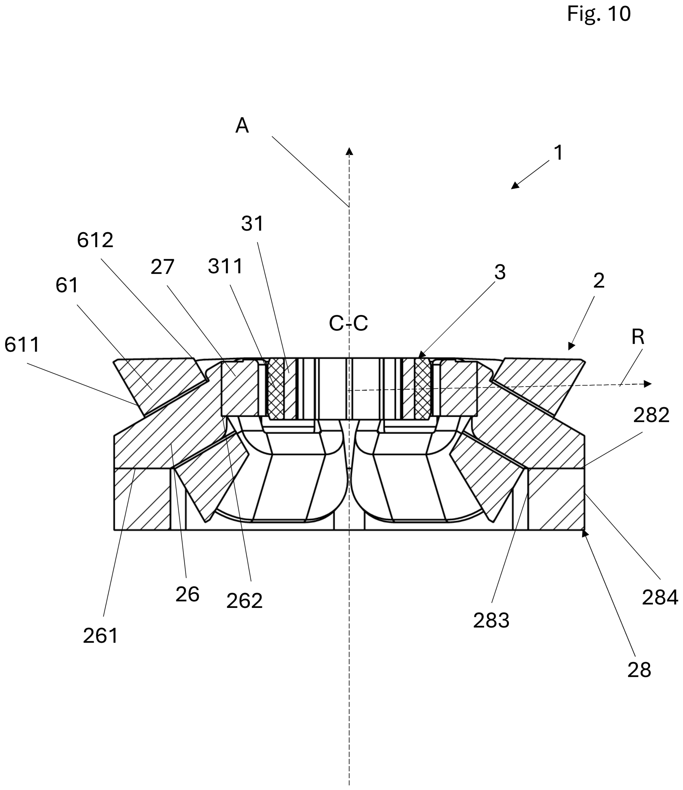

In diesem ersten Ausführungsbeispiel sind die ersten Enden 261 der Verbindungsschenkel 26 an der radialen Innenseite 283 angeordnet. Es sind auch Ausführungsbeispiele möglich, wobei die ersten Enden 261 der Verbindungsschenkel 26 an der axialen Oberseite 281 angeordnet sind (Fig. 9 und 10).

Jedes Polstück 27 weist eine zweite Kontaktfläche 271 auf, die an dem zweiten Ende 262 des Verbindungsschenkel 26 anliegt. Jedes Polstück 27 erstreckt sich von der zweiten Kontaktfläche 271 in einer radialer Richtung R, welche senkrecht zur axialen Richtung A ist, bis zu einer Stirnfläche 272, wobei alle Stirnflächen 272 um die becherförmige Ausnehmung 211 herum angeordnet sind.

Zwischen benachbarten Polstücken 27 sind Zwischenräume vorhanden, wobei in mindestens einem Zwischenraum mindestens ein Sensor eingebracht wird. Es können aber auch mehrere Zwischenräume mindestens einen Sensor aufweisen, sodass in manchen Ausführungsbeispielen in jedem Zwischenraum mindestens ein Sensor angeordnet ist. Der mindestens eine Sensor kann z.B. zur Messung der Rotoreigenschaften, wie z.B. der Position des Rotors, und/oder zur Messung von Statoreigenschaften, wie z.B. der Temperatur vorgesehen werden. Hierfür können unter anderem die folgenden Sensorarten verwendet werden; Hall-Sensoren, Wirbelstromsensoren, optische Sensoren, kapazitive Sensoren, Temperatursensoren. Ebenso können Kombinationen von den genannten Sensoren vorgesehen werden. In allen gezeigten Ausführungsbeispielen sind für die bessere Übersichtlichkeit keine Sensoren dargestellt.

In dem Ausführungsbeispiel in Fig. 2 sind die Stirnflächen 272 der Polstücke 27 jeweils als gekrümmte Fläche ausgestaltet. Die Rundung der Stirnflächen 272 ist koaxial zur becherförmigen Ausnehmung 211 ausgestaltet. In anderen Worten, die Stirnflächen 272 der Polstücke 27 sind ein Segment einer Zylinderoberfläche, wobei die Mittelachse dieses Zylinders mit der Mittelachse der becherförmigen Ausnehmung 211 zusammenfällt und dessen Radius grösser ist als der der becherförmigen Ausnehmung 211, sodass die Stirnflächen 272 nicht in die becherförmige Ausnehmung 211 hineinragen. Es sind aber auch Ausführungsbeispiele möglich, in denen die Stirnflächen 272 keine Rundung aufweisen.

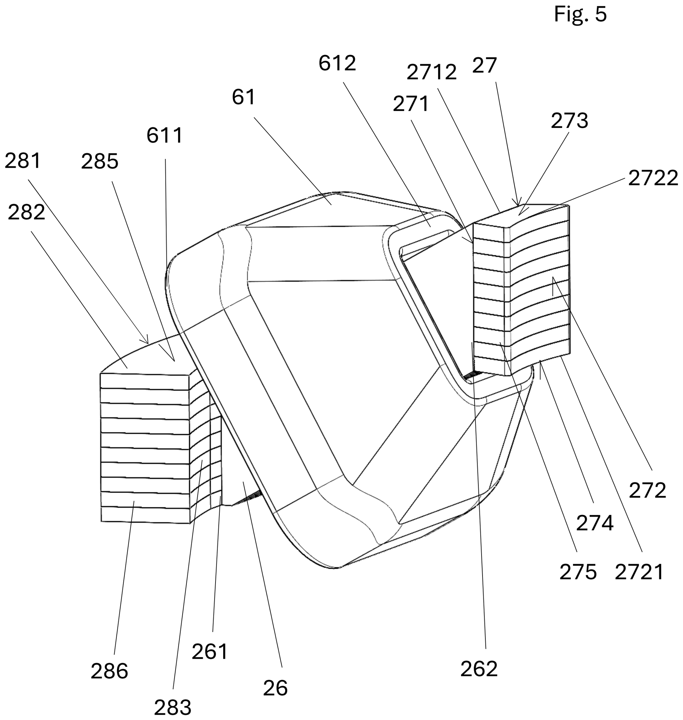

Weiterhin sind die Stirnflächen 272 im ersten Ausführungsbeispiel bezüglich der Umfangrichtung breiter ausgestaltet als die maximale Erstreckung der Kontaktfläche 271 in Umfangsrichtung. Das bedeutet, dass eine der beiden Kanten 2721, 2722 (Fig. 5) der Stirnfläche 272, welche sich in Umfangsrichtung erstrecken, länger ist als eine der Kanten 2711, 2712 (Fig. 5) der Kontaktfläche 271, welche sich in Umfangsrichtung erstrecken. Ist die Stirnfläche 272 als gekrümmte Fläche ausgestaltet, so ist die Länge einer der Kreisbögen des Segments der Zylinderoberfläche in der radialen Ebene grösser als die Länge einer der Kanten 2711, 2712 (Fig. 5) der Kontaktfläche 271, welche sich in Umfangsrichtung erstrecken.

Diese Verbreiterung der Stirnfläche 272 in Umfangrichtung hat den Vorteil, da dadurch die magnetische Funktionalität begünstigt wird. Zum Beispiel können die passive Steifigkeit und die aktiven Lagerkräfte verbessert werden.

Es sind aber auch Ausführungsbeispiele möglich, in denen die Stirnflächen 272 gleich breit ausgestaltet sind, wie die maximale Erstreckung der Kontaktfläche 271 in Umfangsrichtung.

Die Segmente 281 des Rückschlusses sind benachbart zueinander auf einer Kreislinie angeordnet, sodass die an den Segmenten 281 über die Verbindungsschenkel 26 verbundenen Polstücke 27 bzw. deren Stirnflächen 272 den magnetisch wirksamen Kern 31 des Rotors 3 umgeben, wenn der Rotor 3 in die becherförmige Ausnehmung 211 eingesetzt ist.

Jeder Verbindungsschenkel 26 erstreckt sich schräg zur axialen Richtung A, sodass das zweite Ende 262 jedes Verbindungsschenkels 26 in radialer Richtung R einen geringeren Abstand zur becherförmigen Ausnehmung 211 aufweist als das erste Ende 261.

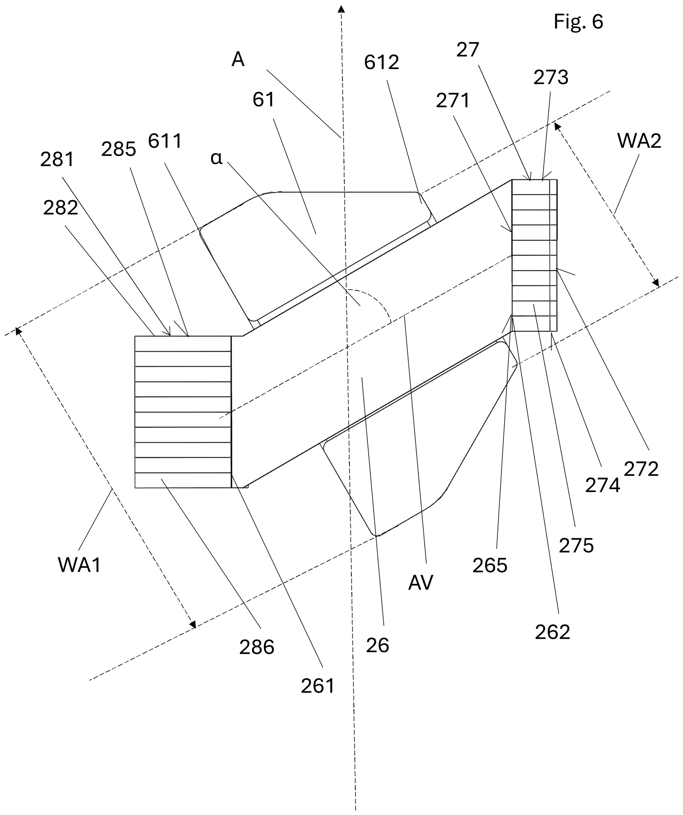

In anderen Worten, der Verbindungsschenkel 26 weist eine radial nach innen gerichtete Erstreckung auf. Das heisst, der Verbindungsschenkel 26 ist weder parallel noch senkrecht zur axialen Richtung A ausgerichtet. Das heisst, eine Achse des Verbindungsschenkels AV (Fig. 6) schliesst mit der axialen Richtung A einen Winkel α ein, der grösser als 0° und kleiner als 90° ist. Bevorzugterweise liegt der Winkel α zwischen 30° bis 80°, besonders bevorzugt ist der Winkel α zwischen 45° und 75°. Bevorzugterweise erstreckt sich die Achse AV des Verbindungsschenkels 26, welche den Winkel α mit der axialen Richtung A einschliesst, von einem ersten Mittelpunkt der ersten Kontaktfläche 263 des Verbindungsschenkels 26 zu einem zweiten Mittelpunkt einer zweiten Kontaktfläche 265 (Fig. 6) des Verbindungsschenkels 26, wobei die zweite Kontaktfläche 265 an der Kontaktfläche 271 des Polstücks 27 angeordnet ist.

Weiterhin bedeutet das, dass das zweite Ende 262 der Verbindungsschenkel 26 einen geringeren Abstand zur becherförmigen Ausnehmung 211 aufweist als das erste Ende 261.

Vergleich man nun den Stand der Technik aus Fig. 1 mit dem ersten Ausführungsbeispiel der Magnetlagervorrichtung 1 in Fig. 2 so ist direkt erkennbar, dass die Magnetlagervorrichtung 1 deutlich kompakter ausgestaltet ist - insbesondere bezüglich der axialen Richtung A. Ein weiterer Vorteil ist, dass in der erfindungsgemässen Magnetlagervorrichtung 1 deutlich mehr Spulenkerne 25 um die becherförmige Ausnehmung 211 herum angeordnet werden können. Dies sorgt für eine, in Umfangsrichtung gesehen, breitere Abdeckung derjenigen Fläche des Rotors 3 welche den Stirnflächen 272 der Polstücke 27 zugewandt ist, durch die Spulenkerne 25. Somit wird eine bessere Flussführung des Magnetfeldes erreicht.

An jedem Verbindungsschenkel 26 ist mindestens eine konzentrierte Wicklung 61 angeordnet, welche den jeweiligen Verbindungsschenkel 26 umgibt.

Die konzentrierten Wicklungen 61 dienen dazu, elektromagnetische Felder zu erzeugen, mit welchen der Rotor 3 berührungslos magnetisch in der becherförmigen Ausnehmung 211 (Fig. 4) lagerbar ist.

In diesem Ausführungsbeispiel sind die konzentrierten Wicklungen 61 konusförmig ausgestaltet ist.

Zum besseren Verständnis ist in Fig. 5 eine perspektivische Darstellung und in Fig. 6 eine schematische Schnittdarstellung eines Segments 281 mit daran angeordnetem Spulenkern 25 und konzentrierter Wicklung 61 des ersten Ausführungsbeispiels aus Fig. 2 gezeigt. In anderen Worten wird unter einer konusförmig ausgestalteten konzentrierten Wicklung 61, eine Wicklung 61 verstanden, wobei die mindestens eine konzentrierte Wicklung 61 am radial ersten Ende 611 einen ersten Aussendurchmesser WA1 und am radial zweiten Ende 612 einen zweiten Aussendurchmesser WA2 aufweist, wobei der erste Aussendurchmesser WA1 grösser als der zweite Aussendurchmesser WA2 ist.

Dies ist vorteilhaft, da eine flache Oberfläche des Stators 2 an einem axialen Ende des Stators 2 erreicht wird. Ohne die konusförmige Ausgestaltung der konzentrierten Wicklung 61 wäre eine flache Oberfläche nicht vorhanden, da ansonsten die mindestens eine konzentrierte Wicklung 61 eine Ausdehnung in axialer Richtung A aufweisen würde, welche in axialer Richtung A gesehen höher ist, als die Erstreckung einer Polstückoberfläche 273 (Fig. 5, 6) des Polstücks 27. In anderen Worten, der höchste Punkt in axialer Richtung A der konzentrierten Wicklung 61 darf nicht den höchsten Punkt in axialer Richtung A des Polstücks 27 übertreffen. Diese beiden können maximal in ein und derselben radialen Ebene liegen.

Das heisst, ein Statorgehäuse 21, welches den Stator 2 umschliesst, weist somit am axialen oberen Ende des Stators 2 eine flache Oberfläche auf. In anderen Worten, die axial obere Oberfläche 212 (Fig. 4) des Statorgehäuses 21 befindet sich in einer radialen Ebene. Dies ist vorteilhaft, für die Magnetlagervorrichtung 1, da dadurch ein besseres Zusammenwirken zwischen Stator 2 und Rotor 3 erreicht wird. Der Rotor 3 bzw. der magnetisch wirksame Kern 31 weist eine radiale Mittelebene RM1 auf, welche in Ruhelage mit einer radialen Mittelebene RM2 des Polstücks 27 zusammenfällt. Dies sorgt dafür, dass die Lagerung des Rotors 3 gut und zuverlässig gewährleistet ist.

Weiterhin ist diese konusförmige Ausgestaltung der mindestens einen konzentrierten Wicklung 61 vorteilhaft für die Kompaktheit der Magnetlagervorrichtung 1. Dadurch ist es möglich die Spulenkerne 25 flexibler anordnen zu können. Zum Beispiel können die einzelnen Polstücke 27 und deren Verbindungsschenkel 26 und die daran angeordneten Wicklungen 61 dichter aneinander angeordnet werden, was zu einer Verbesserung der magnetischen Flussführung zwischen Stator 2 und Rotor 3 sorgt.

In diesem Ausführungsbeispiel der Magnetlagervorrichtung 1 sind die Bauteile (Rückschluss 28 bzw. Segmente 281, Verbindungsschenkel 26 und Polstück 27) alle geblecht aus Elementen (264, 275, 286) ausgestaltet.

Die Segmente 281 sind hierbei geblecht aus Rückschlusselementen 286 hergestellt, wobei die Rückschlusselemente 286 in axialer Richtung A gestapelt sind. Die Verbindungsschenkel 26 sind geblecht aus Elementen 264 hergestellt, wobei die Elemente 264 in Umfangsrichtung des Stators 2 gestapelt sind. Die Polstücke 27 sind geblecht aus Polelementen 275 hergestellt, wobei die Polelemente 275 in axialer Richtung A gestapelt sind.

Die Anzahl der Elemente (264, 275, 286) ist allen Ausführungsbeispielen und Figuren rein exemplarisch zu verstehen. Die Anzahl kann grösser oder aber auch kleiner sein als dargestellt.

Der Wechsel der Orientierung der geblechten Ausgestaltung zwischen den einzelnen Bauteilen (26, 27, 28 bzw. 281) sorgt für eine Reduktion der Wirbelstromverluste der gesamten Magnetlagervorrichtung.

Die in Umfangsrichtung gestapelten Elemente 264 der Verbindungsschenkel 26 weisen den Vorteil auf, dass hierbei geringere Verluste auftreten und der magnetische Widerstand verkleinert wird als eine Stapelung der Elemente 264 der Verbindungsschenkel 26 in axialer Richtung A. Der Grund hierfür ist, dass das Magnetfeld bei den in Umfangsrichtung gestapelten Elementen 264 nicht durch die Blechebenen und jeweils einer Isolation zwischen den Blechebenen, in axialer Richtung A hindurchtreten muss. Das heisst umgekehrt, wäre der Verbindungsschenkel 26 in axialer Richtung A geblecht, müsste das Magnetfeld in axialer Richtung A durch die Grenzen zwischen benachbarten Blechebenen hindurch und würde sowohl Verluste generieren als auch einen erhöhten magnetischen Widerstand erfahren.

Die Orientierungen der Stapelung der jeweiligen Elemente (264, 275, 286) ist auf dieses Ausführungsbeispiel bezogen. Es sind für alle Bauteile (26, 27, 28 bzw. 281) auch andere Orientierung der Stapelung ihrer jeweiligen Elemente (264, 275, 286) möglich. Bevorzugterweise ist aber ein Wechsel der Orientierung beim Übergang von einem Bauteil (26, 27, 28 bzw. 281) zum daran angeordneten Bauteil (26, 27, 28 bzw. 281) vorhanden.

Ein Vorteil der geblechten Ausgestaltung ist, dass sie für eine Reduktion der Wirbelstromverluste im jeweiligen Bauteil (26, 27, 28 bzw. 281) sorgt.

Die meisten Wirbelstromverluste treten an den Polstücken 27 auf, da der Abstand benachbarter Polstücke 27, insbesondere an deren, der becherförmigen Ausnehmung 211 zugewandten Enden besonders klein ist. Am Polstück 27 treten die Felder zunächst in radialer Richtung R aus. Durch die Stapelung der Elemente des jeweiligen Bauteils (26, 27, 28) werden Wirbelströme wirkungsvoll reduziert. Die Felder zweier in Umfangsrichtung des Stators 2 benachbarter Polstücke 27 treten auch in Umfangsrichtung aus diesen aus. Somit muss eine Stapelung der jeweiligen Elemente (264, 275, 286) gewählt werden, die den Austritt der Felder und die damit verbunden Wirbelströme auch in Umfangsrichtung wirkungsvoll verhindern. Dies ist bei den Polstücken 27 idealerweise durch die Stapelung der Polelemente 275 in axialer Richtung A möglich. Ebenso kann als Alternative das Polstück 27 aus weichmagnetischem Werkstoff (engl. «soft magnetic materials», kurz «SMC») hergestellt sein. Dies sorgt für einen ähnlichen Effekt. Insgesamt führen diese Ausführungen dazu, dass die Wirbelstromverluste drastisch reduziert werden. Dadurch ergibt sich die Möglichkeit, wie in Fig. 2 zu erkennen ist, dass die Polstücke 27 in Umfangsrichtung des Stators 2 deutlich näher aneinander angeordnet werden können und somit mehrere Spulenkerne 25 - hier 12 an der Zahl - im Vergleich zum Tempelmotor aus Fig. 1 angeordnet werden können.

In bevorzugten Ausgestaltungen ist das Polstück 27 aus einem weichmagnetischen Werkstoff hergestellt. Dabei ist es bevorzugt, dass die Polstücke 27 und/oder der Segmente 281 und/oder der Verbindungsschenkel 26 aus Elektroblech hergestellt sind. Die Definition eines Elektroblechs wurde bereits in vorherigen Abschnitten beschrieben. Ebenso besteht die Möglichkeit Mu-Metall für die Herstellung der Elemente 264, 275, 286 zu verwenden.

Weitere geeignete weichmagnetische Materialien für die Spulenkerne 25 und den Rückschluss 28 sind beispielsweise ferromagnetische oder ferrimagnetische Materialien, also insbesondere Eisen, Nickel-Eisen, Kobalt-Eisen Silizium-Eisen oder Mu-Metall.

In anderen Ausführungsbeispielen kann das Polstück 27 und/oder der Verbindungsschenkel 26 aus einem Pulververbundwerkstoff, insbesondere einem weichmagnetischer Pulververbundwerkstoff (SMC) hergestellt sein. Die Definition sowie die Vorteile dieses Werkstoffs wurden bereits in vorherigen Abschnitten erläutert.

Gemäss einer speziell bevorzugten Ausgestaltung ist der Stator 2 so ausgestaltet, dass er zusätzlich zur berührungslos magnetischen Lagerung des Rotors 3 auch ein Drehmoment auf den Rotor 3 bzw. den magnetisch wirksamen Kern 31 des Rotors 3 ausüben kann, welches den Rotor 3 zu einer Rotation um eine Solldrehachse antreibt. Das heisst, bei dieser bevorzugten Ausgestaltung ist der Rotor 3 zur Rotation um die axiale Richtung A antreibbar.

Die bereits erwähnte Verbreiterung der Stirnfläche 272 in Umfangrichtung hat den Vorteil, dass dadurch die magnetische Funktionalität begünstigt wird. Zum Beispiel können die passive Steifigkeit und die aktiven Lagerkräfte verbessert werden. Im Hinblick auf die Ausführungsform, bei welcher die Magnetlagervorrichtung 1 zur Erzeugung eines Drehmoments ausgestaltet ist, ergibt sich zudem der Vorteil, dass ein erhöhtes Drehmoment erzeugt werden kann.

Bei dieser Ausgestaltung erzeugen die konzentrierten Wicklungen 61 also elektromagnetische Drehfelder, mit denen der Rotor 3 sowohl berührungslos magnetisch bezüglich des Stators 2 lagerbar ist als auch berührungslos zur Rotation um die axiale Richtung A antreibbar ist.

Der Rotor 3 umfasst den magnetisch wirksamen Kern 31, welcher ring- oder scheibenförmig ausgestaltet ist. Der magnetisch wirksame Kern 31 ist gemäss der Darstellung in Fig. 3 als Ring ausgestaltet und definiert eine magnetische Mittelebene. An dem magnetisch wirksamen Kern sind mehrere Einzelmagnete 311 (Fig. 2) angeordnet. Hierbei handelt es sich um einen sog. vierpolpaarigen Rotor 3. Es versteht sich von selbst, dass in anderen Ausführungsbeispielen Rotoren 3 mit von vier verschiedener Polpaarzahl, z.B. ein einpolpaariger Rotor 3, eingesetzt werden können.

Bezüglich Ausführungsbeispielen mit dem hiergezeigten vierpolpaarigen Rotor 3 ist es vorteilhaft, dass die Polstücke 27 geblecht in axialer Richtung gestapelt, ausgestaltet sind. Findet im Betriebszustand der Magnetlagervorrichtung 1 an einem bestimmten Polstück 27 gerade ein Wechsel zwischen den Einzelmagneten 311 des Rotors 3 statt, also wie in Fig. 2 markierten Ausschnitt AS, so tritt an einer ersten Stelle des Polstücks 27 das Magnetfeld in das Polstück 27 ein und an einer zweiten, in Umfangsrichtung verschobener Stelle wieder aus demselben Polstück 27 aus. Diese Flussführung ist nur bei Polstücken 27, welche in axialer Richtung geblecht und gestapelt sind verlustarm möglich. In Umfangsrichtung gestapelte Polelemente 275 würden hier dem Feldverlauf beim Polwechsel entgegenstehen und zu hohen Verlusten führen.

Wird ein weichmagnetischer Werkstoff (SMC) als Material für das Polstück 27 verwendet, so treten die gleichen Vorteile wie gerade beschrieben auf. Ebenso ist SMC auch gut geeignet für die Verwendung für den vierpolpaarigen Rotor 3.

Alternativ kann der magnetisch wirksame Kern 31 auch als Scheibe ausgestaltet sein. In der Regel ist bei einem scheibenförmigen oder ringförmigen magnetisch wirksamen Kern 31 die magnetische Mittelebene die geometrische Mittelebene des magnetisch wirksamen Kerns 31 des Rotors 3, die senkrecht zur axialen Richtung A liegt. Im Betriebszustand ist der magnetisch wirksame Kern 31 in der radialen Ebene gelagert, welche senkrecht auf der axialen Richtung A steht.

Da es für das Verständnis der Erfindung ausreichend ist, ist in Fig. 2 von dem Rotor 3 nur der magnetisch wirksame Kern 31 dargestellt. Es versteht sich, dass der Rotor 3 natürlich auch noch weitere Komponenten umfassen kann wie beispielsweise Ummantelungen oder Kapselungen, die vorzugsweise aus einem Kunststoff hergestellt sind, oder aus einem Metall oder aus einer Metalllegierung oder aus einer Keramik bzw. einem keramischen Werkstoff. Ferner kann der Rotor 3 auch Flügel zum Mischen, Rühren oder Pumpen von Fluiden oder sonstige Komponenten umfassen.

Wenn der Rotor 3 in die becherförmige Ausnehmung 211 (Fig. 4) eingesetzt ist, wird der Rotor 3 und insbesondere der magnetisch wirksame Kern 31 des Rotors 3 von den radial aussenliegend angeordneten Stirnflächen 272 des Polstücks 27 der Spulenkerne 25 des Stators 2 umgeben.

Wenn sich der magnetisch wirksame Kern 31 des Rotors 3 während des Betriebs in seiner Soll-Position befindet, so ist der magnetisch wirksame Kern 31 zwischen den Stirnflächen 272 der Polstücke 27 zentriert.

Um die für die magnetische Lagerung des Rotors 3 und optional zur Erzeugung eines Drehmoments auf den Rotor 3 notwendigen elektromagnetischen Felder zu erzeugen, tragen die Verbindungsschenkel 26 die als konzentrierte Wicklungen 61 ausgestalteten Wicklungen.

Mit diesen konzentrierten Wicklungen 61 werden im Betriebszustand diejenigen elektromagnetischen Drehfelder erzeugt, mit welchen eine beliebig einstellbare Querkraft in radialer Richtung auf den Rotor 3 ausübbar ist, sodass die radiale Position des Rotors 3, also seine Position in der zur axialen Richtung A senkrechten radialen Ebene, aktiv steuerbar bzw. regelbar ist. Optional wird mit diesen elektromagnetischen Drehfeldern zusätzlich ein Drehmoment auf den Rotor 3 bewirkt. Verkippungen des Rotors 3 können durch die ring- oder scheibenförmige Ausführung des Rotors 3 passiv stabilisiert werden. Der Durchmesser des magnetisch wirksamen Kerns 31 des Rotors 3 ist bevorzugt mindestens doppelt so gross wie eine Kernhöhe des magnetisch wirksamen Kerns 31, wobei die Kernhöhe die Erstreckung des magnetisch wirksamen Kerns in axialer Richtung A angibt.

Mit dem "magnetisch wirksamen Kern 31" des Rotors 3 ist derjenige Bereich des Rotors 3 gemeint, welcher für die Erzeugung der magnetischen Lagerkräfte und optional für die Drehmomentbildung magnetisch mit dem Stator 2 zusammenwirkt.

Wie bereits erwähnt, ist der magnetisch wirksame Kern 31 bei diesem Ausführungsbeispiel ringförmig ausgestaltet und weist mehrere Einzelmagnete 311, welche an ihm angeordnet sind, auf. Es sind aber auch Ausführungsbeispiele möglich, bei denen der magnetisch wirksame Kern 31 keine an ihm angeordneten Einzelmagnete 311 aufweist. Der magnetisch wirksame Kern 31 kann dann vollständig aus einem permanentmagnetischen Material bestehen, sodass der magnetisch wirksame Kern 31 der Permanentmagnet ist. Der magnetisch wirksame Kern 31 ist beispielsweise in radialer Richtung magnetisiert.

Als Permanentmagnete bezeichnet man üblicherweise solche ferromagnetischen oder ferrimagnetischen Werkstoffe, die hartmagnetisch sind, also eine hohe Koerzitivfeldstärke aufweisen. Die Koerzitivfeldstärke ist diejenige magnetische Feldstärke, die man benötigt, um einen Stoff zu entmagnetisieren. Im Rahmen dieser Anmeldung wird unter einem Permanentmagneten ein Werkstoff bzw. ein Material verstanden, der eine Koerzitivfeldstärke, genauer gesagt eine Koerzitivfeldstärke der magnetischen Polarisation aufweist, die mehr als 10'000 A/m beträgt.

Bevorzugterweise weisen der Stator 2 und der Rotor 3 eine vorgegebene Polzahlkombination auf. Die Polzahl des Stators 2 entspricht dabei der Anzahl der Statorpole 25, während die Polzahl des Rotors 3 der Anzahl der Magnetpole, insbesondere der Anzahl der Permanentmagnete, entspricht. Bevorzugte Kombinationen von Statorpolen und Magnetpolen sind insbesondere durch folgende Zahlenpaare gegeben:

| **Statorpole** | **Magnetpole** |
|---|---|
| 5 | 2 |
| 6 | 2 |
| 8 | 2 |
| 9 | 6 |
| 12 | 8 |
| 12 | 14 |
| 24 | 20 |
| 36 | 30 |

Es sind auch solche Ausgestaltungen möglich, bei denen der magnetisch wirksame Kern 31 permanentmagnetfrei, also ohne Permanentmagnete ausgestaltet ist. Der Rotor 3 ist dann z.B. als Reluktanzläufer ausgestaltet. Der magnetisch wirksame Kern 31 des Rotors 3 besteht dann beispielsweise aus einem weichmagnetischen Material. Geeignete weichmagnetische Materialien für den magnetisch wirksamen Kern 31 sind beispielsweise ferromagnetische oder ferrimagnetische Materialien, also insbesondere Eisen, Nickel-Eisen, Kobalt-Eisen, Silizium-Eisen, Mu-Metall.

Ferner sind Ausgestaltungen möglich, bei denen der magnetisch wirksame Kern 31 des Rotors 3 sowohl ferromagnetische Materialien als auch permanentmagnetische Materialien umfasst. Beispielsweise können Permanentmagnete in einen ferromagnetischen Grundkörper eingelegt bzw. eingesetzt werden. Solche Ausgestaltungen sind z.B. vorteilhaft, wenn man bei grossen Rotoren die Kosten durch Einsparen von permanentmagnetischem Material reduzieren will.

Auch sind Ausgestaltungen möglich, bei denen der Rotor nach dem Prinzip eines Käfigläufers ausgestaltet ist.

Der Stator 2 hingegen ist frei von Permanentmagneten. Mit dieser Bezeichnung, dass der Stator 2 "frei von Permanentmagneten" ausgestaltet ist, soll im Rahmen dieser Anmeldung verstanden werden, dass der Stator 2 keine Permanentmagnete umfasst, die einen wesentlichen Beitrag zum Antriebsfeld zum Antreiben der Rotation des Rotors 3 oder zur Generierung der magnetischen Lagerkräfte für den Rotor 3 leisten. Der generierte magnetische Fluss durch den Stator 2 für den Antrieb und die Lagerung des Rotors 3 umfasst also keinen permanentmagnetisch erregten Fluss.

Es ist natürlich möglich, dass der Rotor 3 und/oder der Stator 2 andere Magnete bzw. Permanentmagnete umfassen, beispielsweise in Sensoren, welche z. B. der Erfassung der Winkelstellung des Rotors dienen, oder die sonst einen Zweck erfüllen, der nichts mit dem Generieren des magnetischen Flusses für den Antrieb und die Lagerung des Rotors 3 zu tun hat.

Die Bezeichnung "frei von Permanentmagneten" bezieht sich also nur auf die Generierung des magnetischen Flusses für den Antrieb und die Lagerung des Rotors 3 durch den Stator 2. In anderen Worten, der Stator 2 weist keine Permanentmagnete auf, welche einen Beitrag zum magnetischen Fluss leisten, mittels welchem der Rotor 3 angetrieben und magnetisch gelagert wird.

Es ist aber trotzdem möglich, dass der magnetische Fluss für den Antrieb und die Lagerung des Rotors 3 einen permanentmagnetischen Fluss umfasst, aber dieser wird dann nur vom Rotor 3 selbst generiert. Dies wäre der Fall, wenn der Rotor 3 selbst einen Permanentmagneten umfasst.

Während des Betriebs der Magnetlagervorrichtung 1 wirkt der magnetisch wirksame Kern 31 des Rotors 3 mit dem Stator 2 zusammen, derart, dass der Rotor 3 berührungslos magnetisch bezüglich des Stators 2 lagerbar ist, und vorzugsweise zusätzlich berührungslos magnetisch in Rotation um die axiale Richtung A versetzt werden kann. Dabei ist es besonders vorteilhaft, dass dieselben Wicklungen 61 mit denen die magnetische Lagerung des Rotors 3 bewirkt wird, auch zur Erzeugung eines Drehmoments auf den Rotor 3 dienen. Vorzugsweise sind dann drei Freiheitsgrade des Rotors 3, nämlich seine Position in der radialen Ebene und seine Rotation, aktiv regelbar. Bezüglich seiner axialen Auslenkung aus der radialen Ebene in axialer Richtung A ist der magnetisch wirksame Kern 31 des Rotors 3 passiv magnetisch, das heisst nicht ansteuerbar, durch Reluktanzkräfte stabilisiert. Auch bezüglich der verbleibenden zwei Freiheitsgrade, nämlich Verkippungen bezüglich der zur Solldrehachse senkrechten radialen Ebene ist der magnetisch wirksame Kern 31 des Rotors 3 ebenfalls passiv magnetisch stabilisiert. Der Rotor 3 ist also durch das Zusammenwirken des magnetisch wirksamen Kerns 31 mit den Spulenkernen 25 in axialer Richtung A sowie gegen Verkippungen (insgesamt drei Freiheitsgrade) passiv magnetisch gelagert oder passiv magnetisch stabilisiert und in der radialen Ebene (zwei Freiheitsgrade) aktiv magnetisch gelagert.

Wie dies allgemein üblich ist, bezeichnet auch im Rahmen dieser Anmeldung eine aktive magnetische Lagerung eine solche, die aktiv steuer- bzw. regelbar ist, beispielsweise über die mit den konzentrierten Wicklungen 61 generierten elektromagnetischen Felder. Eine passive magnetische Lagerung oder eine passive magnetische Stabilisierung bezeichnet eine solche, die nicht ansteuerbar bzw. regelbar ist. Die passive magnetische Lagerung oder Stabilisierung basiert beispielsweise auf Reluktanzkräften, welche den Rotor 3 bei einer Auslenkung aus seiner Soll-Position, also z. B. bei einer Verschiebung oder Auslenkung in axialer Richtung A oder bei einer Verkippung, wieder in seine Soll-Position bringen.

Bei der Magnetlagervorrichtung 1 wird im Unterschied zu klassischen Magnetlagern die magnetische Lagerung - und optional die Generierung eines auf den Rotor wirkenden Drehmoments - über elektromagnetische Drehfelder realisiert. Zur kombinierten Erzeugung der magnetischen Lagerkräfte und eines Drehmoments zum Rotieren des Rotors 3 um die axiale Richtung A ist es einerseits möglich - wie in Fig 2 gezeigt-, an jedem Verbindungsschenkel 26 genau eine konzentrierte Wicklung 61 anzuordnen.

Andererseits sind auch Ausgestaltungen möglich, bei denen zur kombinierten Erzeugung der magnetischen Lagerkräfte und eines Drehmoments zum Rotieren des Rotors 3 zwei unterschiedliche Wicklungssysteme vorgesehen sind. Dazu sind dann beispielsweise an jedem Verbindungsschenkel 26 jeweils genau zwei konzentrierte Wicklungen angeordnet, die benachbart zueinander angeordnet sind. Das heisst eine der konzentrierten Wicklungen ist näher am ersten Ende 261 und die andere näher am zweiten Ende 262 des Verbindungsschenkels 26 angeordnet. Eine dieser beiden Wicklungen gehört zu dem ersten der beiden Wicklungssysteme und die andere zu dem zweiten der beiden Wicklungssysteme.

Bei der in Fig. 2 dargestellten Ausführungsform mit genau einer konzentrierten Wicklung 61 an jedem Verbindungsschenkel 26 werden beispielsweise die in einer Kontrolleinheit jeweils ermittelten Werte für den für die Lagerung benötigten Strom und den für die Erzeugung des Drehmoments benötigten Strom rechnerisch -also z. B. mit Hilfe von Software - addiert bzw. überlagert. Der sich daraus ergebende Gesamtstrom wird dann in die jeweilige konzentrierte Wicklung 61 eingeprägt.

Ist der Stator 2 der erfindungsgemässen Magnetlagervorrichtung 1 zur Erzeugung eines Drehmoments ausgestaltet, so ist die Magnetlagervorrichtung 1 für einen elektromagnetischen Drehantrieb geeignet. Ebenso ist es möglich, dass die erfindungsgemässe Magnetlagervorrichtung 1 auch für andere Vorrichtungen wie z.B. Zentrifugalpumpen, Mischvorrichtungen zum Mischen fliessfähiger Substanzen, Rührvorrichtungen, beispielsweise zum Durchmischen eines Fluids in einem Tank, Zentrifugen, Viskositätssensoren, Rotationsfilter, Lüfter oder auch Vorrichtungen zum Tragen und Rotieren von Wafern, beispielsweise in der Halbleiterfertigung, geeignet ist.

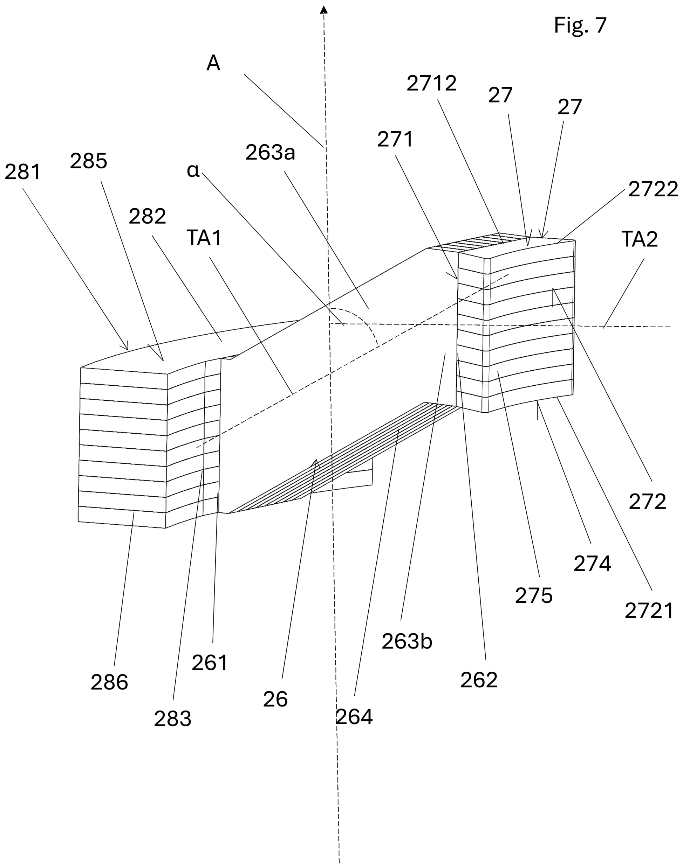

Fig 7 zeigt eine perspektivische Darstellung einer zweiten Ausführungsform eines Segments 281 mit daran angeordnetem Spulenkern 25. In der folgenden Beschreibung der zweiten Ausführungsform eines Segments 281 werden nur die Unterschiede zur ersten Ausführungsform aus Fig. 2-6 näher erläutert. Die Erläuterungen zur ersten Ausführungsform gelten in gleicher Weise oder sinngemäss auch für die zweite Ausführungsform. Gleiche Bezugsziffern bezeichnen die gleichen Merkmale, die unter Bezugnahme auf die erste Ausführungsform erläutert wurden, oder funktionell gleichwertige Merkmale. Der Hauptunterschied in dieser Ausführungsform ist, dass der Verbindungsschenkel 26 vor dem zweiten Ende 262 ein Teilstück 263b aufweist, welches sich nicht schräg erstreckt, sondern in radialer Richtung R. Somit weist der Verbindungsschenkel 26 ein erstes Teilstück 263a auf, welches sich schräg erstreckt, also dessen Mittelachse TA1 einen Winkel α mit der axialen Richtung A einschliesst, der grösser als 0° und kleiner als 90° ist. Bevorzugterweise liegt der Winkel zwischen 20° bis 80°, besonders bevorzugt ist der Winkel α zwischen 45° und 75°. Weiterhin weist der Verbindungsschenkel 26 ein zweites Teilstück 263b auf, dessen Mittelachse TA2 senkrecht auf der axialen Richtung A steht.

Diese zweite Ausführungsform kann z.B. vorteilhaft sein, wenn der Durchmesser des Rotors 3 bzw. damit auch der becherförmigen Ausnehmung 211 kleiner sein soll als bei der ersten Ausführungsform aber die Aussenmasse der Magnetlagervorrichtung nicht verändert werden sollen.

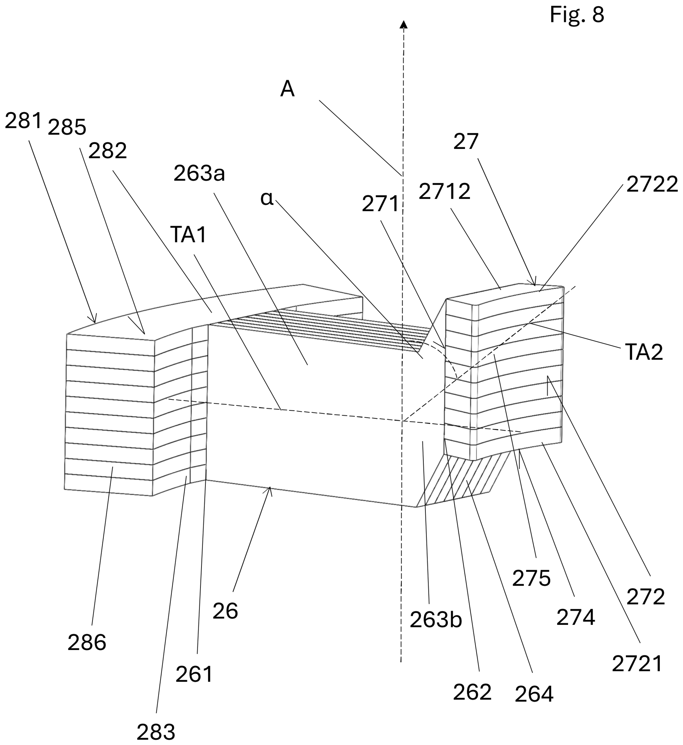

Fig 8 zeigt eine perspektivische Darstellung einer dritten Ausführungsform eines Segments 281 mit daran angeordnetem Spulenkern 25. In der folgenden Beschreibung der dritten Ausführungsform eines Segments 281 werden nur die Unterschiede zur ersten und zweiten Ausführungsform aus Fig. 2-6 bzw. Fig. 7 näher erläutert. Die Erläuterungen zur ersten und zweiten Ausführungsform gelten in gleicher Weise oder sinngemäss auch für die dritte Ausführungsform. Gleiche Bezugsziffern bezeichnen die gleichen Merkmale, die unter Bezugnahme auf die erste und zweite Ausführungsform erläutert wurden, oder funktionell gleichwertige Merkmale.

In der dritten Ausführungsform ist der Hauptunterschied, dass sich das erste Teilstück 263a in radialer Richtung R erstreckt und das zweite Teilstück 263b schräg. Das heisst, die Mittelachse TA1 des ersten Teilstücks 263a steht senkrecht auf der axialen Richtung A und das zweite Teilstück 263b weist eine Mittelachse TA2 auf, welche einen Winkel α mit der axialen Richtung A einschliesst, der grösser als 0° und kleiner als 90° ist. Bevorzugterweise liegt der Winkel zwischen 20° bis 80°, besonders bevorzugt ist der Winkel α zwischen 30° und 60°.

Die dritte Ausführungsform ist vorteilhaft, wenn z.B. ein in axialer Richtung A kompakte Magnetlagervorrichtung 1 erreicht werden soll. Durch diese Anordnung kann die gesamte Magnetlagervorrichtung 1 in axialer Richtung A flacher ausgestaltet werden. Vielmehr ist es mit der dritten Ausführungsform auch nicht notwendig, dass die mindestens eine konzentrierte Wicklung 61 (in Fig. 8 nicht dargestellt) konusförmig ausgestaltet sein muss, sondern diese kann eine rechteckige Form aufweisen, da sie in dieser dritten Ausführungsform nur das erste Teilstück 263a des Verbindungsschenkels 26 umgeben würde. Mit dieser Ausführungsform ist es somit ohne Anpassung der Form der konzentrierten Wicklung 61 möglich, dass der Stator 2, respektive das Statorgehäuse 21 eine flache Oberfläche 212 aufweist und somit alle in der vorherigen Beschreibung genannten Vorteile einer flachen Oberfläche 212 des Statorgehäuses 21 erreicht werden.

Fig. 9 zeigt eine Draufsicht auf ein zweites Ausführungsbeispiels einer erfindungsgemässen Magnetlagervorrichtung 1, sowie Fig. 10 eine schematische Schnittdarstellung des zweiten Ausführungsbeispiels aus Fig. 9. In der folgenden Beschreibung des zweiten Ausführungsbeispiels der Magnetlagervorrichtung 1 werden nur die Unterschiede zum ersten Ausführungsbeispiel aus Fig. 2 näher erläutert. Die Erläuterungen zum ersten Ausführungsbeispiel gelten in gleicher Weise oder sinngemäss auch für das zweite Ausführungsbeispiel. Gleiche Bezugsziffern bezeichnen die gleichen Merkmale, die unter Bezugnahme auf das erste Ausführungsbeispiel erläutert wurden, oder funktionell gleichwertige Merkmale.

Der Hauptunterschied zum ersten Ausführungsbeispiel ist, dass die ersten Enden 261 der Verbindungsschenkel 26 an der axialen Oberseite 282 des Rückschluss 28 angeordnet sind. Weiterhin ist der Rückschluss 28 hier nicht in Segmente 281 unterteilt. Der Rückschluss 28 weist ferner eine sechseckige Aussenform auf.

Der Rückschluss 28 ist in diesem Ausführungsbeispiel bevorzugterweise als Ringbandkern ausgestaltet. Ringbandkerne sind für gewöhnlich für den Einsatz in Transformatoren und Induktivitäten vorgesehen. Die Herstellung der Ringbandkerne ist deutlich einfacher, da es sich hierbei um ein metallisches Band handelt welches wie eine Rolle Klebeband aufgewickelt wird. Das heisst, ein Ringbandkern weist mehrere Bandwicklungen auf. Somit besteht die Möglichkeit kostengünstigere Magnetlagervorrichtungen 1 zu produzieren.

Weiterhin ist die Verwendung eines Ringbandkerns als Rückschluss 28 in diesem Ausführungsbeispiel vorteilhaft, da dadurch Wirbelstromverluste vermieden werden können.

Dadurch dass die Bandwicklungen senkrecht auf der radialen Richtung R angeordnet sind, tritt das Magnetfeld aus den Verbindungsschenkeln 26 in axialer Richtung A in den Rückschluss 28 ein und somit parallel zu den Bandwicklungen. Das heisst, das Magnetfeld durchdringt keine der Bandwicklungen in radialer Richtung R, wodurch Wirbelstromverluste vermieden werden.

Auf dem Rückschluss 28 sind in dem zweiten Ausführungsbeispiel sechs Spulenkerne 25 angeordnet. Idealerweise ist die Anzahl der Spulenkerne 25 gleich der Anzahl n des n-Ecks, welches die Aussenform des Rückschlusses 28 darstellt. Es sind aber auch Ausgestaltung möglich, wobei der Rückschluss 28 ringförmig ausgestaltet ist.

Auf dem Rückschluss 28 sind die Verbindungsschenkel 26 am ersten Ende 261 flächenbündig mit der radialen Innenseite 283 und einer radialen Aussenseite 284 angeordnet. Der Verbindungsschenkel 26 erstreckt sich dann schräg, radial nach innenliegend bis zum zweiten Ende 262, wo das Polstück 27 angeordnet ist. Somit wird auch in diesem Ausführungsbeispiel eine kompakte Magnetlagervorrichtung 1 erreicht. Durch die Anordnung der Spulenkerne 25 auf der axialen Oberseite 282 des Rückschluss 28 wird die Magnetlagervorrichtung 1 auch in ihrer Ausdehnung in radialer Richtung R kompakter, da der Rückschluss 28 nicht eine zusätzliche Ausdehnung in radialer Richtung R über die Ausdehnung der Spulenkerne 25 hinaus, aufweist.

Die konzentrierten Wicklungen 61 sind wiederrum konusförmig ausgestaltet, damit der bereits beschriebenen Vorteil der flachen Oberfläche 212 (Fig. 4) des Statorgehäuses 21 gewährleistet ist.

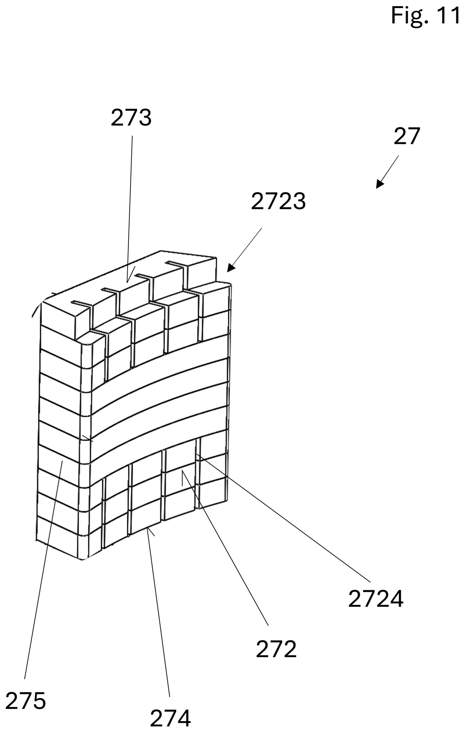

Fig. 11 zeigt eine perspektivische Darstellung einer weiteren Ausführungsform eines Polstücks 27.

Ein Unterschied dieser Ausführungsform ist es, dass die Stirnfläche 272 an einer Kante 2722 (Fig. 7), welche den Übergang zur Polstückoberfläche 273 darstellt, einen Formübergang2723, hier als Stufe ausgestaltet, aufweist. In anderen Worten, die Kante 2722, welche sich am axial oberen Ende der Stirnfläche 272 des Polstücks 27 befindet und ebenso die radial innenliegende Kante der Polstückoberfläche 273 darstellt, weist einen Formübergang 2723 auf.

Da das Polstück 27 geblecht aus Polelementen 275 ausgestaltet ist, die in axialer Richtung A gestapelt sind, ist der Formübergang 2723 derart ausgestaltet, dass mindestens eines der Polelemente 275, welche sich am axial oberen Ende des Polstücks 27 befinden, eine geringere Erstreckung in radialer Richtung R aufweisen als die übrigen Polelemente 275. In anderen Worten, dieses mindestens eine Polelement 275 ist in radialer Richtung R vom Rotor 3 aus gesehen gegenüber den anderen Polelementen 275 zurückversetzt, das heisst es weist einen grösseren Abstand zum Rotor 3 auf als die übrigen Polelemente 275.

Unter einem Formübergang 2723 kann aber ebenso verstanden werden, dass der Übergang von der Stirnfläche 272 zur Polstückoberfläche 273 an der Kante 2721 einen Radius aufweist. Die Kante 2721 kann somit auch gebrochen sein.

Ein weiterer Unterschied in dieser Ausführungsform ist, dass die Stirnfläche 272 mehrere Schlitze 2724 aufweist, welche sich in axialer Richtung A erstrecken.

Eine erste Anzahl an Schlitzen 2724, genauer vier Stück, erstrecken sich von der Polstückunterfläche 274 in axialer Richtung A und eine zweite Anzahl an Schlitzen 2724, hier ebenfalls vier, erstrecken sich von der Polstückoberfläche 273 in zur ersten Anzahl an Schlitzen 2724 entgegengesetzter axialer Richtung A. Die beiden Anzahlen von Schlitzen 2724 berühren sich in der Mitte der Stirnfläche 272 nicht wodurch mehrere Polelement 275 nicht von den Schlitzen 2724 erfasst werden. Es sind aber auch Ausführungen möglich, in denen sich die Schlitze 2724 über alle Polelemente 275 erstrecken. Die Anzahl der Schlitze 2724 in dieser Ausführungsform ist rein exemplarisch zu verstehen, es können ebenso mehr oder weniger sein.

In dieser Ausführungsform sind die Schlitze 2724 parallel oder näherungsweise parallel zueinander in der Stirnfläche 272 angeordnet. Die Anordnung der mehreren Schlitze 2724 parallel zueinander ist vorteilhaft, da sie dadurch auch parallel oder zumindest näherungsweise parallel zum Verlauf des magnetischen Felds angeordnet sind, sodass sie diesen nicht blockieren.

Das Einbringen von Schlitzen 2724 in die Stirnfläche 272 des Polstücks 27 stellt eine elektrische Isolation dar. Das heisst, die Schlitze 2724 sorgen dafür, dass der Pfad der Wirbelströme in den Polelementen 275 unterbrochen und somit blockiert wird. Somit können Wirbelströme, die durch in axialer Richtung A aus den Polelementen 275 austretende Magnetfelder resultieren verhindert werden. Dies hat zur Folge, dass lediglich kleine Wirbelströme im Polstück 27 verbleiben und die Wirbelstromverluste im Polstück 27 insgesamt drastisch reduziert werden.

Die Fertigung der Schlitze 2724, kann über diverse Methoden erfolgen. Zu diesen zählen unter anderem mechanische Verfahren, wie z.B. Fräsen, Stanzen oder Schneiden, wobei zu letzterem auch der Einsatz von Lasern und/oder Wasserstrahlschneidern und/oder Drahterodieren zählt.

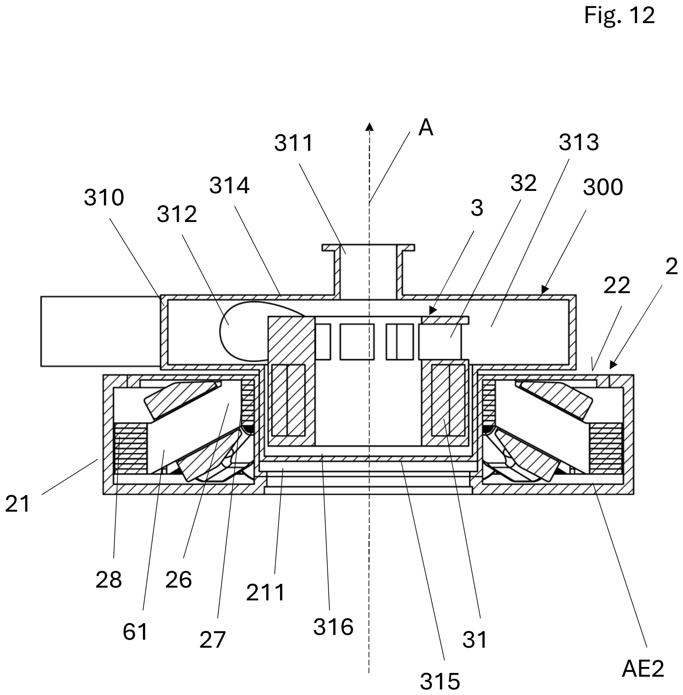

Fig. 12 zeigt eine Schnittdarstellung einer erfindungsgemässen Magnetlagervorrichtung mit darin eingesetzter Pumpeneinheit.

In die Magnetlagervorrichtung 1 aus dem ersten Ausführungsbeispiel (Fig. 2) ist in Fig. 12 eine Pumpeneinheit 300 eingesetzt, wobei die Pumpeneinheit 300 den Rotor 3 umfasst. Es versteht sich, dass die Pumpeneinheit 300 auch in die Magnetlagervorrichtung 1 aus dem zweiten Ausführungsbeispiel (Fig.9) eingesetzt werden kann. Die Pumpeneinheit 300 umfasst ein Pumpengehäuse 310 mit einem Einlass 311 und mit einem Auslass 312 für ein zu förderndes Fluid. Der Rotor 3 ist in dem Pumpengehäuse 310 angeordneten und weist eine Mehrzahl von Flügeln 32 zum Fördern des Fluids auf. Das Pumpengehäuse 310 begrenzt einen Pumpenraum 313. Ferner weist das Pumpengehäuse 310 ein Deckelteil 314 und ein Bodenteil 315 auf, wobei das Bodenteil 315 einen zylindrischen Becher 316 zur Aufnahme des Rotors 3 aufweist. Der Becher 316 ist damit in die becherförmige Ausnehmung 211 des Stators 2 eingesetzt.

Anhand der Darstellung in dieser Figur ist gut zu erkennen, warum der Versatz zwischen dem Rückschluss 28 bzw. einer Rückschlussoberfläche 285 und dem Polstück 27 bzw. der Polstückoberfläche 273 vorteilhaft ist.

Die Pumpeneinheit 300 kann passgenau in die becherförmige Ausnehmung 211 eingesetzt werden, sodass eine flache Oberfläche 22 des Statorgehäuses 21 erreicht wird. Weiterhin kann durch den Versatz zwischen dem Polstück 27und dem Rückschluss 28 der Rotor 3 in axialer Richtung A in Bezug auf die axial obere Oberfläche 22 des Statorgehäuses 21 maximal nach oben, also in axialer Richtung A weiter weg vom zweiten Ende AE2 des Stators 2 gehoben werden. Durch diese maximale Anhebung des Rotors 3 in axialer Richtung A kann der Rotor 3 kompakter ausgestaltet werden, wodurch die Stabilität der Lagerung des Rotors 3 im Stator 2 verbessert wird.

Gerade wenn die Pumpeinheit 300 bzw. die Rotoren 3 für den Einsatz als Mischer eines Fluids, verwendet werden, so können die Flügel 32 eine geringere Erstreckung in axialer Richtung A aufweisen, wodurch gerade in axialer Richtung A weiter oben am Flügel 32 angreifende Kräfte verhindert werden. Dadurch werden Kippmomente verringert und die die Lagerung des Rotors 3 ist gut und zuverlässig gewährleistet.

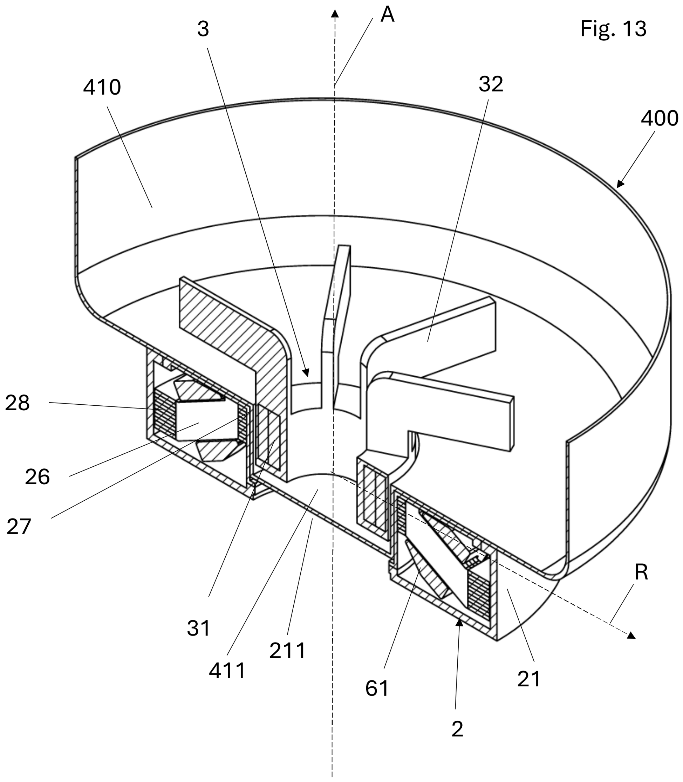

Fig. 13 zeigt eine perspektivische Schnittdarstellung einer erfindungsgemässen Magnetlagervorrichtung mit darin eingesetzter Mischereinheit 400.

In die erfindungsgemässe Magnetlagervorrichtung 1 ist in Fig. 13 eine Mischereinheit 400 eingesetzt, wobei die Mischereinheit 400 den Rotor 3 umfasst. Die Mischereinheit 400 umfasst einen Mischbehälter 410 (hier nur ausschnittsweise dargestellt), welcher in der Regel einen Einlass und einen Auslass (hier nicht dargestellt, oft sind Einlass und Auslass kombiniert) für einen zumischenden Stoff, z.B. ein Fluid aufweist. Der Rotor 3 ist in dem Mischbehälter 410 angeordnet und weist eine Mehrzahl von Flügeln 32 zum Mischen des Stoffs auf. Am axial unteren Ende des Mischbehälters 410 weist dieser einen zylindrischen Becher 411 zur Aufnahme des Rotors 3 auf. Der Becher 411 ist damit in die becherförmige Ausnehmung 211 des Stators 2 eingesetzt.

Anhand der Darstellung in dieser Figur ist gut zu erkennen, warum der Versatz zwischen dem Rückschluss 28 bzw. einer Rückschlussoberfläche 285 und dem Polstück 27 bzw. der Polstückoberfläche 273 vorteilhaft ist.

Die Mischereinheit 400 kann passgenau in die becherförmige Ausnehmung 211 eingesetzt werden, sodass eine flache Oberfläche 22 des Statorgehäuses 21 erreicht wird. Weiterhin kann durch den Versatz V zwischen dem Polstück 27und dem Rückschluss 28 der Rotor 3 in axialer Richtung A in Bezug auf die axial obere Oberfläche 22 des Statorgehäuses 21 maximal nach oben, also in axialer Richtung A weiter weg vom zweiten Ende AE2 des Stators 2 gehoben werden. Durch diese maximale Anhebung des Rotors 3 in axialer Richtung A kann der Rotor 3 kompakter ausgestaltet werden, wodurch die Stabilität der Lagerung des Rotors 3 im Stator 2 verbessert wird.

Gerade wenn die Mischereinheit 400 bzw. die Rotoren 3 für den Einsatz als Mischer eines Fluids, verwendet werden, so können die Flügel 32 eine geringere Erstreckung in axialer Richtung A aufweisen, wodurch gerade in axialer Richtung A weiter oben am Flügel 32 angreifende Kräfte verhindert werden. Dadurch werden Kippmomente verringert und die die Lagerung des Rotors 3 ist gut und zuverlässig gewährleistet.

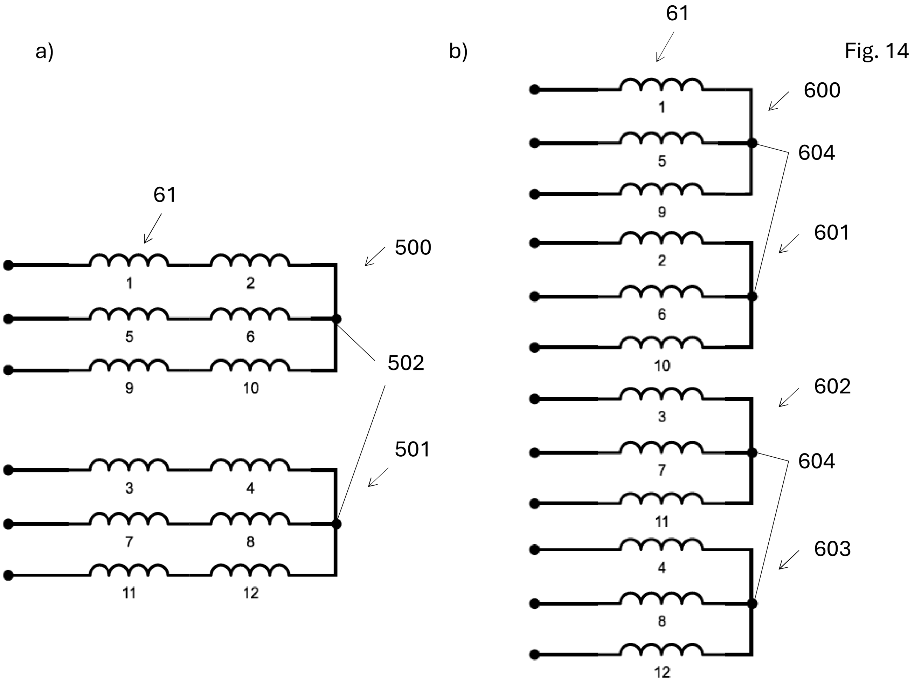

Fig. 14 zeigt eine schematische Darstellung der Verdrahtung einer erfindungsgemässen Magnetlagervorrichtung 1, zur Ansteuerung und Regelung dieser. In a) wird eine 6-Phasige Wicklungsanordnung gezeigt und in b) eine 12-Phasige Wicklungsanordnung.

Die Wicklungsanordnung in a) umfasst einen ersten dreiphasigen Wicklungssatz 500 sowie einen zweiten dreiphasigen Wicklungssatz 501, wobei die beiden Wicklungssätze 500, 501 elektrisch voneinander getrennt ausgestaltet sind und zusammen ein sechsphasiges Verdrahtungssystem bilden. Dabei umfasst jeder Wicklungssatz sechs Wicklungen 61.

Jeder Wicklungssatz 500, 501 ist bevorzugt in Sternschaltung ausgeführt und weist einen jeweiligen Sternpunkt 502 auf, an welchem die zugehörigen Wicklungen 61 miteinander verbunden sind.

Weiterhin umfasst jeder Wicklungssatz 500, 501 jeweils zwei in Serie geschaltete Wicklungen 61, welche eine Phase bilden, sodass pro Phase eine Serienwicklung vorhanden ist. Die Wicklungen 61 sind dabei in einer bevorzugten Orientierung angeschlossen, um eine definierte magnetische Polarität und eine symmetrische Feldverteilung innerhalb des Systems sicherzustellen.

In einer bevorzugten Ausgestaltung sind die zwei in Serie geschalteten Wicklungen gegenpolig verdrahtet, das heisst sie weisen einen entgegengesetzten Wicklungssinn auf.

Die Wicklungsanordnung in b) umfasst vier voneinander getrennte dreiphasige Wicklungssätze 600, 601, 602, 603, die zusammen ein zwölfphasiges System bilden.

Jeder der vier Wicklungssätze 600, 601, 602, 603 ist bevorzugt in Sternschaltung ausgeführt und weist jeweils einen eigenen Sternpunkt 604 auf, an welchem die drei zugehörigen Wicklungen 61 elektrisch miteinander verbunden sind. Die Sternpunkte 604 der einzelnen Wicklungssätze 600, 601, 602, 603 sind dabei besonders bevorzugt voneinander elektrisch isoliert, sodass insgesamt vier separate Sternpunkte 604 ausgebildet sind.

Jeder Wicklungssatz 600, 601, 602, 603 umfasst drei Wicklungen 61, wobei pro Phase jeweils eine einzelne Wicklung 61 vorgesehen ist.

Es versteht sich, dass alle in der Figurenbeschreibung gezeigten Ausführungsbeispiele mit ihren jeweiligen Eigenarten und Komponenten untereinander in jeglicher Form kombinierbar sind.

## Patentansprüche

1. Magnetlagervorrichtung zur berührungslos magnetischen Lagerung eines Rotors (3), der einen scheibenförmigen oder ringförmigen magnetisch wirksamen Kern (31) aufweist, wobei die Magnetlagervorrichtung einen Stator (2) umfasst, der sich in einer axialen Richtung (A) erstreckt und eine becherförmige Ausnehmung (211) aufweist, die an einem axialen Ende des Stators (2) angeordnet ist, und in die der Rotor (3) einsetzbar ist, wobei der Stator (2) eine Mehrzahl von Spulenkernen (25) aufweist, von denen jeder einen Verbindungsschenkel (26) und ein Polstück (27) aufweist, wobei sich jeder Verbindungsschenkel (26) von einem ersten Ende (261) bis zu einem zweiten Ende (262) erstreckt, wobei das erste Ende (261) an einem Rückschluss (28) anliegt, wobei jedes Polstück (27) eine zweite Kontaktfläche (271) aufweist, die an dem zweiten Ende (262) des Verbindungsschenkels (26) anliegt, wobei sich jedes Polstück (27) von der zweiten Kontaktfläche (271) in einer radialer Richtung (R) bis zu einer Stirnfläche (272) erstreckt, wobei die radiale Richtung (R) senkrecht zur axialen Richtung (A) ist, wobei alle Stirnflächen (272) um die becherförmige Ausnehmung (211) herum angeordnet sind und wobei an jedem Verbindungsschenkel (26) mindestens eine konzentrierte Wicklung (61) angeordnet ist, welche den jeweiligen Verbindungsschenkel (26) umgibt,
**dadurch gekennzeichnet, dass**
sich jeder Verbindungsschenkel (26) schräg zur axialen Richtung (A) erstreckt, sodass das zweite Ende (262) jedes Verbindungsschenkels (26) in radialer Richtung (R) einen geringeren Abstand zur becherförmigen Ausnehmung (211) aufweist als das erste Ende (261).

2. Magnetlagervorrichtung nach Anspruch 1, wobei der Rückschluss (28) die ersten Enden (261) aller Verbindungsschenkel (26) verbindet.

3. Magnetlagervorrichtung nach Anspruch 1-2, wobei der Rückschluss (28) mehrere Segmente (281) aufweist, wobei die Segmente (281) bevorzugt geblecht aus Rückschlusselementen (286) hergestellt sind, welche in axialer Richtung (A) gestapelt sind.

4. Magnetlagervorrichtung nach Anspruch 1-3, wobei der Rückschluss (28), eine axiale Oberseite (282) aufweist und wobei die ersten Enden (261) der Verbindungsschenkel (26) an dieser angeordnet sind.

5. Magnetlagervorrichtung nach Anspruch 1-3, wobei der Rückschluss (28), eine radiale Innenseite (283) aufweist und wobei die ersten Enden (261) der Verbindungsschenkel (26) an dieser angeordnet sind.

6. Magnetlagervorrichtung nach einem der vorangehenden Ansprüche, wobei die mindestens eine konzentrierte Wicklung (61) konusförmig ausgestaltet ist.

7. Magnetlagervorrichtung nach Anspruch 6, wobei die mindestens eine konzentrierte Wicklung (61) ein unteres Ende (611) und ein oberes Ende (612) aufweist, wobei das untere Ende (611) dem ersten Ende (261) des Verbindungsschenkels (26) und das obere Ende (612) dem zweiten Ende (262) des Verbindungsschenkels (26) zugewandt ist, wobei die mindestens eine konzentrierte Wicklung (61) am unteren Ende (611) einen ersten Aussendurchmesser (WA1) und am oberen Ende (612) einen zweiten Aussendurchmesser (WA2) aufweist, wobei der erste Aussendurchmesser (WA1) grösser als der zweite Aussendurchmesser (WA2) ist.

8. Magnetlagervorrichtung nach einem der vorangehenden Ansprüche, wobei das Polstück (27) aus einem weichmagnetischen Werkstoff hergestellt ist.

9. Magnetlagervorrichtung nach einem der vorangehenden Ansprüche, wobei das Polstück (27) geblecht aus Polelementen (275) hergestellt ist, wobei die Polelemente (275) in axialer Richtung (A) gestapelt sind und/oder wobei jeder Verbindungsschenkel (26) geblecht aus Elementen (264) hergestellt ist, wobei die Elemente (264) in Umfangsrichtung des Stators (2) gestapelt sind.

10. Magnetlagervorrichtung nach einem der vorangehenden Ansprüche, wobei die Stirnfläche (272) des Polstücks (27) als gekrümmte Fläche ausgestaltet ist, wobei bevorzugterweise die Stirnfläche (272) eine Rundung aufweist, wobei die Rundung koaxial zur becherförmigen Ausnehmung (211) ausgestaltet ist.

11. Magnetlagervorrichtung nach einem der vorangehenden Ansprüche, wobei die Stirnfläche (272) bezüglich der Umfangrichtung breiter ausgestaltet ist als die maximale Erstreckung der zweiten Kontaktfläche (271) in Umfangsrichtung.

12. Magnetlagervorrichtung nach einem der vorangehenden Ansprüche, wobei die Stirnfläche (272) an einer Kante (2722), welche den Übergang zur Polstückoberfläche (273) darstellt, eine Abrundung (2723) aufweist.

13. Magnetlagervorrichtung nach einem der vorangehenden Ansprüche, wobei der Stator (2) zur Erzeugung eines Drehmoments ausgestaltet ist, mit welchem der Rotor (3) berührungslos magnetisch zur Rotation um die axiale Richtung (A) antreibbar ist.

14. Magnetlagervorrichtung nach Anspruch 13 ausgestaltet als elektromagnetischer Drehantrieb, Mischvorrichtung, Zentrifuge, Querstromlüfter, Rotationsfilter oder Viskosimeter.

15. Pumpeneinheit für eine Magnetlagervorrichtung (1) gemäss einem der Ansprüche 1-14, wobei die Pumpeneinheit (300) den Rotor (3) umfasst, wobei die Pumpeneinheit (300) ein Pumpengehäuse (310) mit einem Einlass (311) und mit einem Auslass (312) für ein zu förderndes Fluid aufweist, wobei der Rotor (3) in dem Pumpengehäuse (310) angeordneten ist, wobei der Rotor (3) eine Mehrzahl von Flügeln (32) zum Fördern des Fluids aufweist, wobei das Pumpengehäuse (310) einen Pumpenraum (313) begrenzt, wobei das Pumpengehäuse (310) ein Deckelteil (314) und ein Bodenteil (315) aufweist, wobei das Bodenteil (315) einen zylindrischen Becher (316) zur Aufnahme des Rotors (3) aufweist, welcher Becher (316) in die becherförmige Ausnehmung (211) des Stators (2) der Magnetlagervorrichtung (1) gemäss einem der Ansprüche 1-14, einsetzbar ist.
